# EUROPEAN PATENT SPECIFICATION

(11) **EP 4 087 902 B1**
(45) Date of publication and mention of the grant of the patent: **29.07.2026**
(21) Application number: 20912532.7
(22) Date of filing: 10.01.2020
(51) Int. Cl.: C09D 11/101, C09D 11/102, C09D 11/106, C09D 11/107, C09D 11/322, C09D 11/38, C08F 2/48, C08F 2/50, C08F 8/00, C08F 8/14, C08F 283/12, G03C 1/053, G03C 1/73

(54) **AQUEOUS ENERGY CURABLE INKJET INKS**
WÄSSRIGE ENERGIEHÄRTBARE TINTENSTRAHLDRUCKTINTEN
ENCRES AQUEUSES POUR IMPRESSION À JET D'ENCRE DURCISSABLES PAR ÉNERGIE

(43) Date of publication of application: 16.11.2022
(73) Proprietor: Kao Corporation, Tokyo 103-8210 (JP)
(72) Inventor: TORLINE, Spencer Q., Cincinnati, Ohio 45216 (US); CUMMINGS, Stephen J., Cincinnati, Ohio 45216 (US); BUCHANAN, Stephen, Cincinnati, Ohio 45216 (US); CONTRACTOR, Muslim H., Cincinnati, Ohio 45216 (US)
(74) Representative: Hoffmann Eitle
(86) International application number: PCT/US2020/013056
(87) International publication number: WO 2021/141596

(56) References cited:
- EP-B1- 2 703 459
- WO-A1-02/081576
- WO-A1-2009/115489
- WO-A1-2019/204371
- JP-A- 2012 097 191
- US-A1- 2004 157 959
- US-A1- 2018 298 219

## Description

### BACKGROUND OF THE INVENTION

### FIELD OF THE INVENTION

The present invention relates to aqueous energy curable inkjet inks, specifically those that include (A) an emulsified water-insoluble photopolymerizable compound, (B) a resin, which may be (B1) a photopolymerizable resin or (B2) a non-photopolymerizable resin, (C) a polyether macromer-modified poly(meth)acrylate, and (D) at least 25 wt. % water, based on a total weight of the aqueous energy curable inkjet ink, wherein the emulsified water-insoluble photopolymerizable compound (A) is at least one selected from the group consisting of an emulsified water-insoluble photopolymerizable monomer (A1) and an emulsified water-insoluble photopolymerizable oligomer (A2), the photopolymerizable resin (Bl) is a (meth)acrylated polyurethane dispersion, and the non-photopolymerizable resin (B2) is a polyvinylpyrrolidone, a poly(2-oxazoline), or a polyurethane-poly(meth)acrylate hybrid dispersion.

### DISCUSSION OF THE BACKGROUND

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Inks formulated with volatile organic compounds (VOC) emit vapors and can pollute the environment. As a result of this and other concerns, efforts related to preparing inks that are environmentally friendly have shifted towards water-based inks. Traditionally, such water-based inks are made from the blend of a water-based polymeric binder (typically an acrylic latex) and a pigment (or colorant) dispersion in water. Evaporation of water from these inks then forms a film residue. However, drying of water-based inks is a slow process and adhesion is difficult on thin plastic films used for packaging and labeling. Attempts to improve adhesion through the use of surface treatments, especially on thin plastic films, can cause undesirable wrinkling/surface defects, which adversely affect image print quality.

To improve adhesion on such thin plastic films, inks may be formulated with energy curable (e.g., UV/EB) components (e.g., EP 2,703,459B1 and JP 2012097191 - each incorporated herein by reference in its entirety). While improved adhesion may be accomplished, inks with too high a content of energy curable components can also cause wrinkling/surface defects of thin plastic films due to a high degree of shrinkage, once cured.

In terms of curing speed, water-insoluble energy curable compounds provide a faster cure than water-soluble energy curable counterparts. However, water-insoluble energy curable compounds are difficult to emulsify in water-based inks with respect to forming stable emulsions and in terms of maintaining a jettable viscosity for inkjet printing methods.

Therefore, in aqueous inkjet ink systems, it is difficult to strike a balance between acceptable 1) drying speed, 2) print quality (related to surface defects), 3) adhesion, 4) curing speed, and 5) ink fluid properties (e.g., emulsion stability and ink viscosity).

WO 2009/115489 Al relates to aqueous radiation-curable compositions comprising from 5 to 95 % by weight, relative to the total weight of (A) and (B), of at least one water-dilutable (meth)acrylated urethane (A) containing at least one polyethylene glycol segment and at least one pendant hydrophilic group, and from 5 to 95 % by weight, relative to the total weight of (A) and (B), of at least one other (meth)acrylated compound (B) selected from the group of water-dispersible(meth)acrylated polyurethanes (B1), water-dilutable (meth)acrylates (B2) different from the (meth)acrylated urethane (A), and mixtures thereof and their use for making inks and overprint varnishes.

WO 02/081576 Al describes a method for producing a low-extractable film packaging from an actinic radiation curable aqueous composition containing a water soluble compound having at least one α,β-ethylenically unsaturated, radiation polymerizable group and water as essential components carried out by applying the aqueous composition to a surface which is then irradiated with actinic radiation in the presence of the water thereby forming a cured film wherein less than 50 ppb of the water soluble compound or its residual components are extractable by a food simulant.

### SUMMARY OF THE INVENTION

In view of the forgoing, there is a need for aqueous-based inkjet inks containing water-insoluble energy curable components that have suitable ink fluid properties (e.g., emulsion stability and ink viscosity) for inkjet printing, and which are capable of providing fast drying and curing speeds, without sacrificing print quality and adhesion.

Accordingly, it is one object of the present disclosure to provide novel aqueous energy curable inkjet inks that meet these criteria.

It is another object of the present disclosure to provide novel printed articles which contain a dried and cured form of the aqueous energy curable inkjet inks.

It is another object of the present disclosure to provide novel methods of forming a printed image on a substrate by applying the aqueous energy curable inkjet inks onto the substrate, drying, and then curing.

These and other objects, which will become apparent during the following detailed description, have been achieved by the inventors' discovery that a specific surfactant, a polyether macromer-modified poly(meth)acrylate (C), is capable of emulsifying a wide range of water-insoluble photopolymerizable compounds to produce fast drying and curing inks as stable emulsions with appropriate viscosity for inkjet printing.

Thus, the present invention provides:
(1) An aqueous energy curable inkjet ink, comprising:
   (A) an emulsified water-insoluble photopolymerizable compound;
   (B) a resin, which may be (B1) a photopolymerizable resin or (B2) a non-photopolymerizable resin;
   (C) a polyether macromer-modified poly(meth)acrylate; and
   (D) at least 25 wt. % water, based on a total weight of the aqueous energy curable inkjet ink, wherein
      the emulsified water-insoluble photopolymerizable compound (A) is at least one selected from the group consisting of an emulsified water-insoluble photopolymerizable monomer (A1) and an emulsified water-insoluble photopolymerizable oligomer (A2),
      the photopolymerizable resin (Bl) is a (meth)acrylated polyurethane dispersion, and
      the non-photopolymerizable resin (B2) is a polyvinylpyrrolidone, a poly(2-oxazoline), or a polyurethane-poly(meth)acrylate hybrid dispersion.
(2) A printed article, comprising:
   a substrate and a dried and cured form of the aqueous energy curable inkjet ink disposed on the substrate.
(3) A method of forming a printed image on a substrate, comprising:
   applying the aqueous energy curable inkjet ink onto the substrate with an inkjet printhead;
   drying; and then
   curing the aqueous energy curable inkjet ink.

The foregoing paragraphs have been provided by way of general introduction, and are not intended to limit the scope of the following claims. The described embodiments, together with further advantages, will be best understood by reference to the following detailed description.

### DETAILED DESCRIPTION OF THE INVENTION

In the following description, it is understood that other embodiments may be utilized and structural and operational changes may be made without departure from the scope of the present embodiments disclosed herein.

The terms "curable" and "photopolymerizable" describe the ability of a material/composition to polymerize, harden, and/or cross-link in response to a suitable curing stimulus (energy source) such as actinic radiation, accelerated particle radiation, and thermal energy, for example, ultraviolet (UV) energy, radiation from the visible region of the spectrum, infrared (IR) energy, electron beam (EB) energy, heat energy, or other source of energy. The term "energy curable" is intended to cover all forms of curing upon exposure to an energy source, such as those described above, with specific mention being made to ultraviolet (UV) energy and electron beam (EB) energy.

As used herein, the term "cured" refers to a composition whereby curable/photopolymerizable components present in the composition have undergone polymerization, crosslinking, and/or hardening, through the formation of (1) chemical bonds, (2) mechanical bonds, or (3) a combination of a chemical and mechanical bonds, to form a polymerized or cross-linked network. The term "cured" is intended to include both "partially cured" compositions, whereby less than 50 wt. %, or less than 40 wt. %, or less than 30 wt. %, or less than 20 wt. %, or less than 10 wt. %, or less than 5 wt. % of the curable/photopolymerizable functional groups present in the composition are polymerized and/or crosslinked, and "completely cured" compositions, whereby at least 50 wt. %, preferably at least 60 wt. %, preferably at least 70 wt. %, preferably at least 80 wt. %, more preferably at least 90 wt. %, even more preferably at least 95 wt. %, yet even more preferably at least 99 wt. % of the curable/photopolymerizable functional groups present in the composition are polymerized and/or crosslinked. The degree of curing described above may be quantified by measuring percent reacted ethylenically unsaturated groups using Fourier Transform Infrared spectroscopy (FTIR).

As used herein, "ethylenically unsaturated" refers to groups containing a C=C which are curable/photopolymerizable such as (meth)acrylate, (meth)acrylamide, vinyl, allyl, and the like. Such ethylenically unsaturated groups may be present in materials classified as monomers, oligomers, and/or polymers, where a "monomer" is a compound whose molecules can join together to form oligomers or polymers, an "oligomer" is a polymeric compound containing relatively few repeated structural units (i.e., 2, 3, or 4 repeat units), and a "polymer" refers to a large molecule, or macromolecule, composed of many repeated structural units (i.e., 5 or more repeat units). Alkoxylated compounds are excluded from the definition of an oligomer or a polymer and are herein considered monomers unless indicated otherwise. For example, ethoxylated (15) trimethylolpropane triacrylate is considered a monomer herein.

As used herein, "mono-ethylenically unsaturated" refers to compounds/components which have one ethylenically unsaturated group per molecule, while "poly-ethylenically unsaturated" refers to those compounds/components having two or more (e.g., 2, 3, 4, 5, 6, 7, 8, etc.) ethylenically unsaturated groups per molecule. For example a "mono-ethylenically unsaturated monomer" refers to a monomeric material containing one ethylenically unsaturated group that may participate in curing when exposed to a curing stimulus.

The term "(meth)acrylate" is used herein to refer to both acrylate and methacrylate groups. **In** other words, this term should be read as through "meth" is optional. Further, "(meth)acrylate" is used generally to refer to both acrylic acid-based compounds and acrylic ester-based compounds.

As used herein, "alkoxylated" or "alkoxylate" refers to compounds containing a (poly)ether group (i.e., (poly)alkylene glycol) derived from reaction with, oligomerization of, or polymerization of one or more alkylene oxides having 2 to 4 carbon atoms, and specifically includes ethoxylated compounds ((poly)ethylene glycol containing compounds derived from reaction with ethylene oxide (EO)), propoxylated compounds ((poly)propylene glycol containing compounds derived from reaction with propylene oxide (PO)), and butoxylated compounds ((poly)butylene glycol containing compounds derived from reaction with butylene oxide (BO)), as well as mixtures thereof.

When referencing various inks/compositions herein, the phrase "substantially free", unless otherwise specified, describes an amount of a particular component (e.g., a photoinitiator) present in the ink/composition being less than about 1 wt. %, preferably less than about 0.5 wt. %, more preferably less than about 0.1 wt. %, even more preferably less than about 0.05 wt. %, yet even more preferably 0 wt. %, relative to a total weight of the ink/composition.

As used herein, the terms "optional" or "optionally" means that the subsequently described event(s) can or cannot occur or the subsequently described component(s) may or may not be present (e.g., 0 wt. %).

Unless otherwise specified, "water-soluble" refers to compounds/components having a solubility in water at 25 °C of greater than or equal to 50 g/L (≥ 5 wt. %), including compounds/components which are freely soluble/miscible in water, while "water-insoluble" refers to compounds/components having a solubility in water at 25 °C of less than 50 g/L (< 5 wt. %).

As referred to herein, "emulsion stability" refers to the ability of an emulsion to resist change in its properties over time. Most pertinent in the present disclosure is the ability of an emulsified ink to resist emulsion breaking, whereby the emulsion separates into two (or more) un-emulsified phases of oil and water.

### Aqueous energy curable inkjet inks

The present disclosure is directed to aqueous energy curable inkjet inks that possess/provide for acceptable 1) drying speed, 2) print quality, 3) adhesion, 4) curing speed, and 5) printed image flexibility.

The aqueous energy curable inkjet inks of the present disclosure generally include the following components: (A) an emulsified water-insoluble photopolymerizable compound; (B) a resin, which may be (B1) a photopolymerizable resin or (B2) a non-photopolymerizable resin; (C) a polyether macromer-modified poly(meth)acrylate; and (D) water; and optionally include (D1) an organic solvent, (E) a pigment, (F) a photoinitiator, (G) a wax, (H) a silane, (I) an additive (e.g., optical brightener, stabilizer, security taggant, etc.) and/or (J) a water-soluble photopolymerizable compound.

### (A) Emulsified water-insoluble photopolymerizable compound

The aqueous energy curable inkjet inks of the present disclosure are formulated with one or more emulsified water-insoluble photopolymerizable compound(s), which refer to water-insoluble photopolymerizable compounds, which are monomers and/or oligomers, that contain at least one ethylenically-unsaturated group (e.g., a (meth)acrylate group, a (meth)acrylamide group, a vinyl group, an allyl group, etc.), and which are emulsified within the aqueous energy curable inkjet ink system. Water-insoluble photopolymerizable compounds provide a faster cure than water-soluble photopolymerizable counterparts. However, such water-insoluble compounds are difficult to emulsify in water-based inks with respect to forming stable emulsions and in terms of maintaining a jettable viscosity for inkjet printing methods. As will become clear, the inventors have unexpectedly found a specific surfactant that is capable of emulsifying a wide range of water-insoluble photopolymerizable compounds to produce inks as stable emulsions with appropriate viscosity for inkjet printing, and thus the aqueous energy curable inkjet inks are generally open to any emulsified water-insoluble photopolymerizable compound, i.e., those monomers and/or oligomers having a solubility in water at 25 °C of less than 50 g/L, preferably less than 45 g/L, preferably less than 40 g/L, preferably less than 35 g/L, preferably less than 30 g/L, preferably less than 25 g/L, preferably less than 20 g/L, more preferably less than 15 g/L, even more preferably less than 10 g/L, yet even more preferably less than 5 g/L.

A total amount of the water-insoluble photopolymerizable compound (A) present in the aqueous energy curable inkjet inks may be anywhere from at least 10 wt. %, preferably at least 12 wt. %, preferably at least 14 wt. %, more preferably at least 16 wt. %, even more preferably at least 18 wt. %, yet even more preferably at least 20 wt. %, and up to 40 wt. %, preferably up to 38 wt. %, preferably up to 36 wt. %, preferably up to 34wt. %, preferably up to 32 wt. %, preferably up to 30 wt. %, preferably up to 28 wt. %, more preferably up to 26 wt. %, even more preferably up to 24 wt. %, yet even more preferably up to 22 wt. %, based on a total weight of the aqueous energy curable inkjet ink.

Types of water-insoluble photopolymerizable compound(s) (A) which may be included in the disclosed aqueous energy curable inkjet inks include an emulsified water-insoluble photopolymerizable monomer (A1) and an emulsified water-insoluble photopolymerizable oligomer (A2). Of course, the aqueous energy curable inkjet inks may be formulated with mixtures of these materials as component (A). However, it is preferred that the water-insoluble photopolymerizable monomer(s) (A1) constitute a majority (> 50 wt. %) of the water-insoluble photopolymerizable compound(s) (A) present in the disclosed aqueous energy curable inkjet inks, for example, that the water-insoluble photopolymerizable monomer(s) (A1) make up more than 50 wt. %, preferably more than 60 wt. %, preferably more than 70 wt. %, more preferably more than 80 wt. %, even more preferably more than 90 wt. %, yet even more preferably more than 95 wt. %, and up to 100 wt. % of a total content of water-insoluble photopolymerizable compound(s) (A).

### <water-insoluble photopolymerizable monomer (A1)>

The water-insoluble photopolymerizable monomer (A1) may be a water-insoluble photopolymerizable mono-ethylenically unsaturated monomer, a water-insoluble photopolymerizable poly-ethylenically unsaturated monomer, or a mixture.

The water-insoluble photopolymerizable mono-ethylenically unsaturated monomer is a monomer containing a single ethylenically unsaturated (photopolymerizable) group, with the ethylenically unsaturated group being, for example, a (meth)acrylate group, a (meth)acrylamide group, a vinyl group, or an allyl group. Suitable examples of the water-insoluble photopolymerizable mono-ethylenically unsaturated monomer include, but are not limited to,
- alkyl, aryl, or arylalkyl mono(meth)acrylates including mono(meth)acrylates of (i) straight chain alkyl alcohols having 1 to 22 carbon atoms, preferably 2 to 16 carbon atoms, preferably 3 to 12 carbon atoms, (ii) branched chain or cyclic alkyl alcohols having 3 to 22 carbon atoms, preferably 5 to 16 carbon atoms, preferably 6 to 12 carbon atoms, (iii) aryl alcohols having 6 to 22 carbon atoms, preferably 8 to 16 carbon atoms, preferably 10 to 12 carbon atoms, (iv) arylalkyl alcohols having 7 to 22 carbon atoms, preferably 8 to 16 carbon atoms, preferably 10 to 14 carbon atoms; and (v) alkoxylated (e.g., ethoxylated or propoxylated) variants of any alcohol mentioned above; such as those mono(meth)acrylates formed from methyl, ethyl, propyl, n-butyl, sec-butyl, t-butyl, hexyl, ethylhexyl, stearyl, lauryl, cyclohexyl, isobornyl, dicyclopentadienyl, and t-butylcyclohexyl, phenyl alcohols, and the like, as well as alkoxylated variants thereof, with specific mention being made to, 3,3,5-trimethylcyclohexyl acrylate (e.g., SR420), 3,3,5-trimethylcyclohexyl methacrylate (e.g., CD421), ethoxylated (4) phenyl acrylate (e.g., SR410), isobornyl acrylate (e.g., SR506A), dicyclopentadienyl methacrylate (e.g., CD535), diethylene glycol methyl ether methacrylate (e.g., CD545), ethoxylated (4) nonylphenol acrylate (e.g., SR504), ethoxylated (4) nonyl phenol methacrylate (e.g., CD612), triethylene glycol ethyl ether methacrylate (e.g., CD730), alkoxylated lauryl acrylate (e.g., CD9075), isodecyl methacrylate (e.g., SR242), stearyl acrylate (e.g., SR257), tetrahydrofurfuryl acrylate (e.g., SR285), lauryl methacrylate (e.g., SR313A), stearyl methacrylate (e.g., SR324), lauryl acrylate (e.g., SR335), 2-phenoxyethyl acrylate (e.g., SR339), 2-phenoxyethyl methacrylate (e.g., SR340), isodecyl acrylate (e.g., SR395), isooctyl acrylate (e.g., SR440), octadecyl acrylate (e.g., SR484), tridecyl acrylate (e.g., SR489D), each available from Sartomer, preferably isobornyl acrylate (e.g., SR506A);
- mono(meth)acrylate monomers which carry at least one hydroxyl group and/or amino group per molecule including hydroxyalkyl monoesters of (meth)acrylic acid, aminoalkyl monoesters of (meth)acrylic acid, and (poly)alkylene glycol monoesters of (meth)acrylic acid, in which the hydroxyalkyl group, aminoalkyl group, or (poly)alkylene glycol group contains 2 to 22 carbon atoms, preferably 3 to 16 carbon atoms, preferably 4 to 12 carbon atoms, with specific mention being made to 4-hydroxycyclohexylacrylate, 4-hydroxycyclohexylmethacrylate, 1,6-hexanediol monoacrylate, 1,6-hexanediol monomethacrylate, 2-[(1',1',1'-trifluoro-2'-(trifluoromethyl)-2'-hydroxy)propyl]-3-norbornyl methacrylate, 1,4-cyclohexanedimethanol monoacrylate, and amine modified tripropylene glycol ester of acrylic acid (e.g., CN386, available from Sartomer);
- mono(meth)acrylamides such as N-cyclohexyl(meth)acrylamide and N,N-cyclohexylmethyl(meth)acrylamide;
- mono-vinyl or mono-allyl monomers including (i) N-vinylamides such as N-vinyl-2-caprolactam (e.g., V-CAP), available from Ashland, (ii) vinyl ether monomers such as hydroxybutyl vinyl ether (e.g., RAPI-CURE HBVE) and cyclohexyl vinyl ether (e.g., RAPI-CURE CVE), each available from Ashland, 4-hydroxymethyl cyclohexylmethyl vinyl ether, dodecylvinyl ether, and octadecylvinylether, (iii) styrenes such as styrene and α-alkyl styrene (e.g., α-methylstyrene and vinyltoluene), (iv) vinyl ketones having 3 to 20 carbon atoms, (v) oxazolidinones, such as 3-vinyl-5-methyl-2-oxazolidinone (e.g., VMOX) available from BASF, (vi) allyl variants of any of these;
- and mixtures thereof;
- with preferred water-insoluble photopolymerizable mono-ethylenically unsaturated monomers being one or more of SR506A (Sartomer), V-CAP (Ashland), and CN386 (Sartomer).

The water-insoluble photopolymerizable poly-ethylenically unsaturated monomer may be a di-ethylenically unsaturated monomer, a tri-ethylenically unsaturated monomer, or higher ethylenically unsaturated compounds (e.g., tetra-, penta-, etc. ethylenically unsaturated monomers), with the ethylenically unsaturated (photopolymerizable) groups being, for example, a (meth)acrylate group, a (meth)acrylamide group, a vinyl group, an allyl group, or a mixture thereof.

In some embodiments, the water-insoluble photopolymerizable poly-ethylenically unsaturated monomer may be based on a polyol where two, three, four, or more of the hydroxyl groups of the polyol are functionalized with photopolymerizable groups (e.g., (meth)acrylate functional groups), including straight chain, branched chain, hyperbranched, or cyclic alkyl polyols. Exemplary polyols include, but are not limited to, ethylene glycol, diethylene glycol, triethylene glycol, propylene glycol, dipropylene glycol, tripropylene glycol, 1,3-propanediol, butane diols (e.g., 1,2-, 1,3-, 1,4-butanediol), pentane diols (e.g., 1,5-pentanediol), hexane diols (e.g., 1,6-hexanediol), glycerin, 1,2,4-butanetriol, trimethylolethane, trimethylolpropane, di(trimethylolpropane), pentaerythritol, dipentaerythritol, pentane triols (e.g., 1,2,5-pentane triol), hexane triols (e.g., 1,2,6-hexanetriol), neopentyl glycol, and alkoxylated adducts of any of the above-noted polyols.

Suitable examples of the water-insoluble photopolymerizable poly-ethylenically unsaturated monomer include, but are not limited to,
- polyol poly(meth)acrylates such as neopentyl glycol diacrylate (e.g., SR247), 1,6-hexanediol diacrylate (HDDA)(e.g., SR238), each available from Sartomer, and trimethylolpropane triacrylate (TMPTA)(e.g., MIRAMER M300), available from Rahn;
- alkoxylated polyol poly(meth)acrylates such as tripropyleneglycol diacrylate (TPGDA)(e.g., SR 306) and propoxylated (2) neopentyl glycol diacrylate (PONPGDA)(e.g., SR9003B), each available from Sartomer, and dipropylene glycol diacrylate (DPGDA)(e.g., MIRAMER M222), available from Rahn;
- amine-modified poly(meth)acrylates such as amine modified alkoxylated polyol acrylate (e.g., GENOMER 3364), available from Rahn, and amine-modified ethoxylated trimethylolpropane triacrylate (e.g., EBECRYL LEO 10551, available from Allnex);
- poly-vinyl or poly-allyl monomers such as triethyleneglycol divinylether (e.g., RAPI-CURE DVE 3), available from Ashland, cyclohexanedimethanol divinylether, diethyleneglycol divinylether, hexanediol divinylether, and butanediol divinylether, each available from Sigma Aldrich, and bis[4-(ethenyloxy)butyl]hexanedioic acid ester (e.g., VECTOMER 4060), bis[4-(ethenyloxybutyl]ester of 1,3-benzenedicarboxylic acid (e.g., VECTOMER 4010), and tris(4-vinyloxybutyl) trimellitate (e.g., VECTOMER 5015), each available from Vertellus Specialties;
- hybrid poly-ethylenically unsaturated monomers containing both (meth)acrylate and vinyl ether/allyl ether functionality such as 2-(2-vinylethoxy)ethyl acrylate (e.g., VEEA), 2-(2-vinylethoxy)ethyl methacrylate (e.g., VEEM), and methyl 2-(allyloxymethyl) acrylate (e.g., MeAOMA), each available from Nippon Shokubai, and 2-(2-vinyloxyethoxy)-2-propyl (meth)acrylate, 2-(2-vinyloxyethoxy)-3-propyl (meth)acrylate, 2-(2-vinyloxyethoxy)-2-butyl (meth)acrylate, 2-(2-vinyloxyethoxy) 4-butyl (meth)acrylate, 2-(2-allyloxyethoxy)ethyl (meth)acrylate, 2-(2-allyloxyethoxy)-2-propyl (meth)acrylate, 2-(2-allyloxyethoxyxy)-3-propyl (meth)acrylate, 2-(2-allyloxyethoxy)-2-butyl (meth)acrylate, 2-(2-allyloxyethoxy)-4-butyl (meth)acrylate, 2-(2-vinyloxypropoxy)ethyl (meth)acrylate, 2-(2-vinyloxypropoxy)-2-propyl (meth)acrylate, 2-(2-vinyloxypropoxy)-3-propyl (meth)acrylate, 2-(3-vinyloxypropoxy)ethyl (meth)acrylate, 2-(3-vinyloxypropoxy) 2-propyl (meth)acrylate, and 2-(3-vinyloxypropoxy)-3-propyl(meth)acrylate; and
- combinations thereof;
- with preferred water-insoluble photopolymerizable poly-ethylenically unsaturated monomers being one or more of VEEA (Nippon Shokubai), SR238 (Sartomer), MIRAMER M222 (Rahn), MIRAMER M300 (Rahn), SR9003B (Sartomer), GENOMER 3364 (Rahn), and EBECRYL LEO 10551 (Allnex).

The water-insoluble photopolymerizable monomer (A1) may be included in the aqueous energy curable inkjet inks in any amount up to 40 wt. %, for example from 0 wt. %, preferably at least 5 wt. %, preferably at least 10 wt. %, preferably at least 12 wt. %, **preferably** at least 14 wt. %, more preferably at least 16 wt. %, even more preferably at least 18 wt. %, yet even more preferably at least 20 wt. %, and up to 40 wt. %, preferably up to 38 wt. %, preferably up to 36 wt. %, preferably up to 34 wt. %, preferably up to 32 wt. %, preferably up to 30 wt. %, preferably up to 28 wt. %, more preferably up to 26 wt. %, even more preferably up to 24 wt. %, yet even more preferably up to 22 wt. %, based on a total weight of the aqueous energy curable inkjet ink.

In terms of cure speed, it is preferred that the water-insoluble photopolymerizable poly-ethylenically unsaturated monomer constitutes a majority (> 50 wt. %) of the water-insoluble photopolymerizable monomer(s) (A1) present in the disclosed aqueous energy curable inkjet inks, for example, that the water-insoluble photopolymerizable poly-ethylenically unsaturated monomers make up more than 50 wt. %, preferably more than 60 wt. %, preferably more than 70 wt. %, more preferably more than 80 wt. %, even more preferably more than 90 wt. %, yet even more preferably more than 95 wt. %, and up to 100 wt. % of a total water-insoluble photopolymerizable monomer (A1) content.

### <water-insoluble photopolymerizable oligomer (A2)>

The water-insoluble photopolymerizable oligomer (A2) is an oligomer containing at least 1, preferably at least 2, preferably at least 3 ethylenically unsaturated (photopolymerizable) groups, with the ethylenically unsaturated (photopolymerizable) groups being, for example, a (meth)acrylate group, a (meth)acrylamide group, a vinyl group, an allyl group, or a mixture thereof. When more than one ethylenically unsaturated group is present in the water-insoluble photopolymerizable oligomer (A2), it is preferred that each ethylenically unsaturated group is the same. In preferred embodiments, the water-insoluble photopolymerizable oligomer (A2) contains at least 1 (meth)acrylate group, more preferably each ethylenically unsaturated (photopolymerizable) group present is an (meth)acrylate group.

Suitable examples of the water-insoluble photopolymerizable oligomer (A2) may include, but are not limited to,
- epoxy (meth)acrylates including aliphatic epoxy monoacrylates (e.g., CN152) and aliphatic epoxy diacrylates (e.g., CN132), each available from Sartomer;
- polyester acrylates including hyperbranched polyester acrylates (e.g., CN2302 and CN2303) and amine-modified polyester tetraacrylates (e.g., CN549), each available from Sartomer;
- aliphatic and aromatic urethane acrylates including aliphatic urethane diacrylates (e.g., EBECRYL 8411, available from Allnex, and CN9893, available from Sartomer), hexafunctional aliphatic urethane acrylates (e.g., EBECYRL 1290, available from Allnex), hexafunctional aromatic urethane acrylates (e.g., EBECRYL 220, available from Allnex), and aliphatic polyester-based urethane diacrylates (e.g., CN991, CN962, CN964, CN966J75, each available from Sartomer);
- oligomeric silicone acrylates including difunctional aliphatic silicone acrylates (e.g., CN9800, available from Sartomer, EBECRYL 350, available from Allnex) and silicone hexa-acrylates (e.g., EBECRYL 1360, available Allnex);
- (meth)acrylated (meth)acrylics; and
- combinations thereof;
- with preferred water-insoluble photopolymerizable oligomers (A2) being one or more of CN2302 (Sartomer), CN2303 (Sartomer), CN9893 (Sartomer), EBECYRL 1290 (Allnex), EBECRYL 1360 (Allnex), and CN966J75 (Sartomer).

**In** some embodiments, the water-insoluble photopolymerizable oligomer (A2) is included in the aqueous energy curable inkjet inks in an amount up to 15 wt. %, for example from 0 wt. %, preferably at least 1 wt. %, preferably at least 2 wt. %, preferably at least 3 wt. %, more preferably at least 4 wt. %, even more preferably at least 5 wt. %, yet even more preferably at least 6 wt. %, and up to 15 wt. %, preferably up to 14 wt. %, preferably up to 13 wt. %, preferably up to 12 wt. %, preferably up to 11 wt. %, preferably up to 10 wt. %, more preferably up to 9 wt. %, even more preferably up to 8 wt. %, yet even more preferably up to 7 wt. %, based on a total weight of the aqueous energy curable inkjet ink.

In some embodiments, when both water-insoluble photopolymerizable monomer(s) (A1) and water-insoluble photopolymerizable oligomer(s) (A2) are employed, a weight ratio of the water-insoluble photopolymerizable monomer(s) (A1) to the water-insoluble photopolymerizable oligomer(s) (A2) typically ranges from at least 1:1, preferably at least 2:1, preferably at least 3:1, preferably at least 5:1, preferably at least 7:1, preferably at least 8:1, and up to 20:1, preferably up to 18:1, preferably up to 16:1, preferably up to 14:1, preferably up to 12:1, preferably up to 10:1.

### (B) Resin

The aqueous energy curable inkjet inks of the present disclosure are formulated with a resin (B), for example to improve both the printing process and the film properties of the ink after being dried/cured. The resins employed herein are polymeric materials, either homopolymers or copolymers, which may be classified as either photopolymerizable resins (B1) or non-photopolymerizable resins (B2), and thus can form a film whether capable of being cured or not.

The resin (B) may be present in the aqueous energy curable inkjet ink in an amount of up to 10 wt. %, for example, at least 0.1 wt. %, preferably at least 0.5 wt. %, more preferably at least 1 wt. %, even more preferably at least 1.5 wt. %, yet even more preferably at least 2 wt. %, and up to 10 wt. %, preferably up to 8 wt. %, preferably up to 6 wt. %, more preferably up to 4 wt. %, even more preferably up to 3 wt. %, yet even more preferably up to 2.5 wt. %, based on a total weight of the aqueous energy curable inkjet ink.

### <Photopolymerizable resins (B1)>

In some embodiments, the resin (B) is a photopolymerizable resin (B 1). Photopolymerizable resins (B1) are polymeric materials which contain photopolymerizable groups, and thus undergo chemical changes (i.e., polymerization, crosslinking, etc.) when subjected to a curing source. Use of photopolymerizable resins (B1) may be advantageous in terms of adhesion to the substrate and hardness of the polymerized film after being cured.

The photopolymerizable resins (B1) are (meth)acrylated polyurethane dispersions, preferably water-borne (meth)acrylated polyurethane dispersions, more preferably water-borne acrylated polyurethane dispersions. When a dispersion is employed, the dispersion is preferably in water, and may have a solids (active) content of at least 5 wt. %, preferably at least 10 wt. %, more preferably at least 15 wt. %, even more preferably at least 20 wt. %, and up to 50 wt. %, preferably up to 40 wt. %, more preferably up to 30 wt. %, even more preferably up to 25 wt. %. A sufficient quantity of the dispersion may thus be added to provide the aqueous energy curable inkjet ink with an acceptable quantity of photopolymerizable resin (B1), as described previously in terms of resin (B) weight percentage.

In some embodiments, the (meth)acrylated polyurethane dispersions are those prepared from urethanization of a suitable polyisocyanate, a polyol, and a (meth)acrylate compound containing at least one functional group capable of reacting with isocyanate groups, for example as described in JP 2012097191 and EP 2,703,459B1, each incorporated herein by reference in its entirety, as well as other optional components such as chain extenders (e.g., diamines such as ethylenediamine, putrescine, diaminopropane as well as chain extenders capable of supplying anionic functionality to the (meth)acrylated polyurethanes such as diaminocarboxylic acids) as are known to those of ordinary skill in the art.

For example, the (meth)acrylated polyurethane dispersion may be prepared from urethanization of at least:
(i) one or more polyisocyanates (organic compounds containing at least two isocyanate functionalities) including aliphatic, cycloaliphatic, and/or aromatic polyisocyanates, with specific mention being made to butylene diisocyanate, hexamethylene diisocyanate (HDI), isophorone diisocyanate (IPDI), 3(4)-isocyanatomethyl-methylcyclohexyl isocyanate (IMCI), trimethylhexamethylene diisocyanate (2,2,4 and/or 2,4,4-trimethyl-hexamethylene diisocyanate), bis(4,4'-isocyanato-cyclohexyl)methane (H₁₂MDI), bis(isocyanate-methyl)-methylcyclohexane, 1,8-diisocyanatooctane, 1,4-cyclohexylene diisocyanate, 1,4-phenylene diisocyanate, 2,4- and/or 2,6-toluene diisocyanate (TDI), 1,5-naphthylene diisocyanate, 2,4'- and/or 4,4'-diphenylmethane diisocyanate (MDI), triphenylmethane-4,4',4"-triisocyanate, and the like;
(ii) one or more polyols, including neutral polyols such as ethylene glycol, diethylene glycol, triethylene glycol, propylene glycol, dipropylene glycol, tripropylene glycol, 1,3-propanediol, butane diols (e.g., 1,2-, 1,3-, 1,4-butanediol), pentane diols (e.g., 1,5-pentanediol), hexane diols (e.g., 1,6-hexanediol), glycerin, 1,2,4-butanetriol, trimethylolethane, trimethylolpropane, di(trimethylolpropane), pentaerythritol, dipentaerythritol, pentane triols (e.g., 1,2,5-pentane triol), hexane triols (e.g., 1,2,6-hexanetriol), neopentyl glycol, mannitol, sorbitol, glucose, fructose, mannose, sucrose, specialty polyols (e.g., polycarbonate polyols, polycaprolactone polyols, polybutadiene polyols, polysulfide polyols, etc.), and the like, as well as ionic polyols or polyols which contain at least one reactive group (e.g., amine, carboxylic acid, sulfonic acid, etc.) capable of reacting with an acid or a base to form an ionic group (e.g., ammonium salt), examples of which include diethanolamine, dimethylolpropionic acid (DMPA), dimethylol butanoic acid (DMBA), and the like, as well as alkoxylated adducts of any of the above-noted polyols; and
(iii) one or more (meth)acrylate compounds containing at least one functional group (e.g., hydroxyl group, amino group, etc.) capable of reacting with isocyanate groups, for example hydroxyalkyl (meth)acrylates (including those containing one, two, three, or more hydroxyl groups) such as those hydroxyalkyl (meth)acrylates prepared by reacting a polyol (a diol, a triol, etc.) such as ethylene glycol, propylene glycol, glycerol, trimethylol propane, hexane diol, pentaerythritol, and the like) with (meth)acrylic acid in amounts such that the resultant product contains one or more hydroxyl groups, with specific mention being made to, hydroxyethyl (meth)acrylate, hydroxypropyl (meth)acrylate, hydroxybutyl (meth)acrylate, hydroxypropyl (meth)acrylate, hydroxyhexyl (meth)acrylate, 4-hydroxycyclohexyl(meth)acrylate, triglycerol di(meth)acrylate, dipentaerythritol penta(meth)acrylate, as well as alkoxylated adducts of any of the above.

As is well known to those of ordinary skill in the art, polyurethanes can contain additional groups such as urea, allophanate, biuret, carbodiimide, oxazolidinyl, isocyanurate, uretdione, ether, ester, carbonate, etc., in addition to urethane groups, and such additional groups are also contemplated herein.

Suitable examples of (meth)acrylated polyurethanes may include, but are not limited to, UCECOAT 2801, UCECOAT 2804, UCECOAT 6558, UCECOAT 7177, UCECOAT 7655, UCECOAT 7660, and UCECOAT 7710, each available from Allnex, NEORAD R441 available from Fitz Chem LLC., BAYHYDROL UV2317 available from Covestro, and GENOMER 4379W, available from Rahn. Particularly preferred (meth)acrylated polyurethanes are aliphatic (meth)acrylated polyurethane dispersions such as GENOMER 4379W, available from Rahn, and those (meth)acrylated polyurethane dispersions which are anionic in nature (contain anionic groups) such as UCECOAT 2801 and UCECOAT 2804, each available from Allnex.

### < Non-photopolymerizable resins (B2)>

In some embodiments, the resin (B) is a non-photopolymerizable resin (B2). Non-photopolymerizable resins (B2) are polymeric materials which do not contain photopolymerizable groups (are themselves non-photopolymerizable), and thus do not undergo any chemical changes when dried or subjected to an energy (curing) source (e.g. UV or EB source). Therefore, unlike photopolymerizable resins (B1), non-photopolymerizable resins (B2) result in film formation without shrinkage when subjected to an energy source, and may thus be desirable for use on substrates where shrinkage or surface defects are of particular concern, for example.

Non-photopolymerizable resins (B2) suitable for use in the disclosed aqueous energy curable inkjet inks have a relatively low weight average molecular weight of up to 7,000 g/mol, for example, a weight average molecular weight of at least 3,000 g/mol, preferably at least 3,200 g/mol, preferably at least 3,400 g/mol, more preferably at least 3,600 g/mol, even more preferably at least 3,800 g/mol, yet even more preferably at least 4,000 g/mol, and up to 7,000 g/mol, preferably up to 6,800 g/mol, preferably up to 6,600 g/mol, more preferably up to 6,400 g/mol, even more preferably up to 6,200 g/mol, yet even more preferably up to 6,000 g/mol.

In some embodiments, the non-photopolymerizable resin (B2) is water-soluble. For example, the non-photopolymerizable resin (B2) may have a solubility in water at 25 °C of at least 50 g/L, preferably at least 75 g/L, preferably at least 100 g/L, preferably at least 150 g/L, preferably at least 200 g/L, preferably at least 250 g/L, preferably at least 300 g/L, preferably at least 350 g/L, more preferably at least 400 g/L, even more preferably at least 450 g/L, yet even more preferably at least 500 g/L. In some embodiments, the non-photopolymerizable resin (B2) has a Hansen solubility parameter (δ in units of MPa^{1/2}) of at least 23.0, preferably at least 23.5, preferably at least 24.0, preferably at least 24.5, preferably at least 25.0, and up to 27.0, preferably up to 26.5, preferably up to 26.0, preferably up to 25.5.

Regarding non-photopolymerizable resins (B2) which are water-soluble, specific mention is made to those formed from polymerization of a heterocyclic monomer. The non-photopolymerizable resin (B2) may be formed from polymerization of a heterocyclic monomer containing a photopolymerizable group wherein the photopolymerizable group is polymerized and the heterocycle remains intact after polymerization (i.e., the non-photopolymerizable resin (B2) contains repeating heterocyclic units in which there are no remaining photopolymerizable groups), or the non-photopolymerizable resin (B2) may be formed from ring-opening polymerization of a heterocyclic monomer wherein the non-photopolymerizable resin (B2) is substantially free of repeating heterocyclic units. In an embodiment, the non-photopolymerizable resin (B2) is a polyvinylpyrrolidone (PVP) and/or a poly(2-oxazoline).

In some embodiments, the non-photopolymerizable resin (B2) is a homopolymer of polyvinylpyrrolidone (PVP), with specific mention being made to PVP K-12, available from Ashland. Low molecular weight (e.g., 3,000 to 7,000 g/mol) copolymers of polyvinylpyrrolidone may also be used herein, including, but not limited to, vinylpyrrolidone/vinyl acetate copolymers, vinylpyrrolidone/vinyl caprolactam copolymers, and vinylpyrrolidone/(meth)acrylate copolymers such as vinylpyrrolidone/dimethylaminoethylmethacrylate copolymers.

In some embodiments, the non-photopolymerizable resin (B2) is a poly(2-oxazoline), which may be formed from living cationic ring-opening polymerization of a 2-oxazoline. Preferably, the poly(2-oxazoline) is a poly(2-alkyl-2-oxazoline) (prepared from ring-opening of 2-alkyl-2-oxazoline), where the alkyl group is made up of hydrogen and anywhere from at least 1, preferably at least 2, more preferably at least 3 carbon atoms, and up to 6, preferably up to 5, more preferably up to 4 carbon atoms. Exemplary alkyl groups of poly(2-alkyl-2-oxazoline) may include, but is not limited to, methyl, ethyl, isopropyl, n-propyl, and cyclopropyl, preferably methyl and ethyl. The poly(2-oxazoline) useful herein may contain various α-end groups (those formed from initiating the living cationic ring-opening polymerization) and ω-end groups (those groups which terminate the living cationic ring-opening polymerization). For example, the poly(2-oxazoline) may have α-end groups including, but not limited to, hydrogen, methyl, allyl, propargyl, and benzyl, and ω-end groups including, but not limited to, hydroxy, amino including unsubstituted amino groups (-NH₂) and substituted amino groups (e.g., 2-hydroxyethylamine, piperazine, etc.), azido, and thiol (-SH). In preferred embodiments, the poly(2-oxazoline) is a poly(2-ethyl-2-oxazoline) or a poly(2-methyl-2-oxazoline) containing any combination of end groups described above, more preferably a poly(2-ethtyl-2-oxazoline) or poly(2-methyl-2-oxazoline) containing a hydrogen α-end group and a hydroxy ω-end group. AQUAZOL 5, available from Polymer Chemistry Innovations, Inc. as well as low molecular weight ULTROXA products, available from AVROXA, are specific examples of poly(2-oxazoline)s useful in the disclosed aqueous energy curable inkjet inks.

Alternatively, the non-photopolymerizable resin (B2) may be dispersible in water. In some embodiments, the non-photopolymerizable resin (B2) is a polyurethane-poly(meth)acrylate hybrid dispersion. The polyurethane-poly(meth)acrylate hybrid dispersion may be prepared by physical methods, whereby aqueous polyurethane and poly(meth)acrylate dispersions (emulsions) are independently prepared first and then mixed together under mechanical mixing. Alternatively, the polyurethane-poly(meth)acrylate hybrid dispersion may be prepared according to a chemical method, whereby a polyurethane dispersion is first prepared, and then (meth)acrylates (and optionally other vinyl monomers) are polymerized in the polyurethane dispersion, in some cases in a core-shell emulsion polymerization in which the polyurethane acts as seed particles and the (meth)acrylates (and optionally other vinyl monomers) are polymerized within the polyurethane particles.

The polyurethane portion of the polyurethane-poly(meth)acrylate hybrid dispersion may be a polymer or oligomer (pre-polymer) containing multiple urethane groups (-O-C(O)-NH-) formed from reaction between:
(i) a suitable polyisocyanate (organic compounds containing at least two isocyanate functionalities) such as an aliphatic, a cycloaliphatic and/or an aromatic polyisocyanate, with specific mention being made to butylene diisocyanate, hexamethylene diisocyanate (HDI), isophorone diisocyanate (IPDI), 3(4)-isocyanatomethyl-methylcyclohexyl isocyanate (IMCI), trimethylhexamethylene diisocyanate (2,2,4 and/or 2,4,4-trimethyl-hexamethylene diisocyanate), bis(4,4'-isocyanato-cyclohexyl)methane (H₁₂MDI), bis(isocyanate-methyl)-methylcyclohexane, 1,8-diisocyanatooctane, 1,4-cyclohexylene diisocyanate, 1,4-phenylene diisocyanate, 2,4- and/or 2,6-toluene diisocyanate (TDI), 1,5-naphthylene diisocyanate, 2,4'- and/or 4,4'-diphenylmethane diisocyanate (MDI), triphenylmethane-4,4',4"-triisocyanate, and the like; and
(ii) a suitable polyol such as ethylene glycol, diethylene glycol, triethylene glycol, propylene glycol, dipropylene glycol, tripropylene glycol, 1,3-propanediol, butane diols (e.g., 1,2-, 1,3-, 1,4-butanediol), pentane diols (e.g., 1,5-pentanediol), hexane diols (e.g., 1,6-hexanediol), glycerin, 1,2,4-butanetriol, trimethylolethane, trimethylolpropane, di(trimethylolpropane), pentaerythritol, dipentaerythritol, pentane triols (e.g., 1,2,5-pentane triol), hexane triols (e.g., 1,2,6-hexanetriol), neopentyl glycol, mannitol, sorbitol, glucose, fructose, mannose, sucrose, specialty polyols (e.g., polycarbonate polyols, polycaprolactone polyols, polybutadiene polyols, polysulfide polyols, etc.), and the like, as well as alkoxylated adducts of any of the above-noted polyols.

As is well known to those of ordinary skill in the art, polyurethanes can contain additional groups such as urea, allophanate, biuret, carbodiimide, oxazolidinyl, isocyanurate, uretdione, ether, ester, carbonate, etc., in addition to urethane groups.

The poly(meth)acrylate portion of the polyurethane-poly(meth)acrylate hybrid dispersion may be formed from the polymerization of one or more (meth)acrylates such as alkyl (meth)acrylates (e.g., methyl (meth)acrylate, ethyl (meth)acrylate, butyl (meth)acrylate, 2-ethylhexyl (meth)acrylate, etc.) and hydroxyalkyl (meth)acrylates (including those containing one, two, three, or more hydroxyl groups). Such hydroxyalkyl (meth)acrylates may be prepared by reacting a polyol (a diol, a triol, etc.) such as ethylene glycol, propylene glycol, glycerol, trimethylol propane, hexane diol, pentaerythritol, and the like) with (meth)acrylic acid in amounts such that the resultant product contains one or more hydroxyl groups. Specific examples include, but are not limited to, hydroxyethyl (meth)acrylate, hydroxypropyl (meth)acrylate, hydroxybutyl (meth)acrylate, hydroxypropyl (meth)acrylate, hydroxyhexyl (meth)acrylate, 4-hydroxycyclohexyl(meth)acrylate, triglycerol di(meth)acrylate, dipentaerythritol penta(meth)acrylate, as well as alkoxylated adducts of any of the above. Copolymers of the above (meth)acrylate monomers are also included within the term "poly(meth)acrylate" as it appears herein. The polymerization of (meth)acrylate monomers to provide the polyurethane-poly(meth)acrylate hybrid dispersions useful in the aqueous energy curable inkjet inks may be accomplished by any polymerization technique known by those of ordinary skill in the art.

In some embodiments, the aqueous energy curable inkjet inks are substantially free of polyurethane resins, resins made of cellulose derivatives (e.g., carboxymethyl cellulose, cellulose esters such as cellulose acetate propionate), poly(meth)acrylate resins (acrylic resins), poly(meth)acrylamide resins, poly(vinyl acetate) resins, water-soluble epoxy resins, polyvinylalcohol resins, polyolefin resins, as well as resins which are made from any blend or copolymer thereof, including any blend or copolymer formed from one or more of the above with another polymer type not listed, as well as emulsions or dispersions thereof. Specific examples of such resins include, but are not limited to, JONCRYL 678, which is an acrylic resin having a weight average molecular weight of 8,500 g/mol available from BASF, AVICOR 2550, which is an acrylic emulsion available from Celanese, UNITIKA YA-4010 and UNITIKA SE-1030N, which are polyolefin emulsions available Unitika, DISPEX GA40, which is an acrylic copolymer available from BASF, and INDUPRINT SE 245, which is an emulsion polymer based on styrene and acrylates available from Indulor.

In some embodiments, the aqueous energy curable inkjet inks are substantially free of medium to high molecular weight (e.g., >7,000 g/mol) non-photopolymerizable resins such as polyvinylpyrrolidone homopolymers PVP K-15, PVP K-30, PVP K-60, PVP K-85, PVP K-90, and PVP K-120, each available from Ashland; vinylpyrrolidone/vinyl acetate copolymers such as LUVITEC VA 64P, LUVITEC VA 6535P, and LUVISKOL VA37E, each available from BASF, PVP/VA E-535, PVP/VA I-335, PVP/VA W-635, and PVP/VA W-735, each available from Ashland; vinylpyrrolidone/vinyl caprolactam copolymers such as LUVITEC VPC 55K 65W, available from BASF; vinylpyrrolidone/(meth)acrylate copolymers such as vinylpyrrolidone/dimethylaminoethylmethacrylate copolymer, for example SOREZ HS-205, available from Ashland; and medium to high molecular weight poly(2-oxazolines) such as AQUAZOL 50, AQUAZOL 200, and AQUAZOL 500, available from Polymer Chemistry Innovations, Inc. For example, it has been found that acrylic resins such as acrylic homopolymers, acrylic/styrene copolymers, and acrylic emulsions; polyolefin resins such as polyolefin emulsions; as well as other medium to high molecular weight non-photopolymerizable resins, such as those described above, tend to form aqueous energy curable inkjet inks which are not stable.

### (C) Polyether macromer-modified poly(meth)acrylate

In order to emulsify the water-insoluble photopolymerizable compounds (A) described previously, along with any other water-insoluble components that may be present, and to form an ink with a jettable viscosity, the aqueous energy curable inkjet inks of the present disclosure are formulated with a specific surfactant (emulsifying agent), namely a polyether macromer-modified poly(meth)acrylate (C). Emulsification is possible when the polyether macromer-modified poly(meth)acrylate (C) is employed in quantities of at least 1 wt. %, preferably at least 1.5 wt. %, preferably at least 2 wt. %, more preferably at least 2.5 wt. %, even more preferably at least 3 wt. %, yet even more preferably at least 3.5 wt. %, and up to 8 wt. %, preferably up to 7 wt. %, preferably up to 6 wt. %, preferably up to 5.5 wt. %, preferably up to 5 wt. %, more preferably up to 4.5 wt. %, even more preferably up to 4 wt. %, based on the total weight of the aqueous energy curable inkjet ink.

Polyether macromer-modified poly(meth)acrylates (C) are copolymers, preferably comb copolymers, formed from (i) a poly(meth)acrylate backbone and (ii) one or more polyether macromer side chains attached to the poly(meth)acrylate backbone, and optionally (iii) one or more silicone macromer side chains attached to the (meth)acrylate backbone. Therefore, as long as at least one polyether macromer side chain is attached to a poly(meth)acrylate backbone, the material meets the definition of a "polyether macromer-modified poly(meth)acrylate (C)" regardless of whether additional macromer side chain types (e.g., silicone macromer side chains) are also attached to the poly(meth)acrylate backbone. The macromer side chains (only polyether macromer side chains or a mixture of polyether macromer side chains and silicone macromer side chains) are attached to the poly(meth)acrylate backbone via covalent bonds.

Macromers are intended to mean pre-formed oligomers or polymers having at least one, preferably precisely one reactive functional end group such as an ethylenically unsaturated end group, in particular a (meth)acrylate end group, through which reaction or (co)polymerization reactions can proceed to incorporate or graft the macromer into/onto the polymer backbone. Macromers are thus macromolecular monomers which can be converted to homo- or copolymers of defined structures. For example, macromers having an ethylenically unsaturated end group can be converted by free-radical (co)polymerization to comb polymers having a defined length of the side chains (macromer method). Such macromers can be obtained from suitable oligomer/polymer precursor components bearing a suitable functional group such as a hydroxyl (-OH) group, which can then react with a suitable ethylenically unsaturated moiety, e.g., (meth)acrylic acid, via transesterification, wherein the ethylenically unsaturated group is retained and incorporated into the formed macromer.

The polyether macromer-modified poly(meth)acrylate (C) may be formed using either a "macromer method" or a "grafting to" method. In the "macromer method", a macromer such as a polyether macromer containing at least one, preferably precisely one ethylenically unsaturated end group is copolymerized with at least one (meth)acrylate monomer and optionally another ethylenically unsaturated monomer type, such that the (meth)acrylate monomer (and optionally another ethylenically unsaturated monomer type) forms the poly(meth)acrylate backbone while the macromer is intermittently incorporated into the backbone as a side chain along the length of the backbone, each side chain being a length which is defined by the length of the macromer employed as comonomer. In the "grafting to" method, the poly(meth)acrylate backbone is formed first by (co)polymerization of at least one (meth)acrylate monomer which carries at least one functional group (e.g., -OH) per molecule, and the macromer side chain(s) (e.g., polyether macromer side chains) are then attached to the formed poly(meth)acrylate backbone in a polymer analogous reaction, e.g., by transesterification, addition reaction, or condensation reaction, via reaction of the at least one functional group with at least one macromer precursor containing at least one complimentary reactive functional group.

The polyether macromer-modified poly(meth)acrylate (C) of the present disclosure typically has a weight average molecular weight of at least 2,000 g/mol, preferably at least 2,500 g/mol, preferably at least 3,000 g/mol, preferably at least 3,500 g/mol, more preferably at least 4,000 g/mol, even more preferably at least 4,500 g/mol, yet even more preferably at least 5,000 g/mol, and up to 200,000 g/mol, preferably up to 175,000 g/mol, preferably up to 150,000 g/mol, preferably up to 125,000 g/mol, preferably up to 100,000 g/mol, preferably up to 75,000 g/mol, preferably up to 50,000 g/mol, more preferably up to 25,000 g/mol, even more preferably up to 15,000 g/mol, yet even more preferably up to 10,000 g/mol, for example as determined by GPC analysis.

### <(i) poly(meth)acrylate backbone>

The poly(meth)acrylate backbone may be prepared by (co)polymerization of one or more (meth)acrylate monomers (and optionally other ethylenically unsaturated monomer types), for example using radical polymerization techniques, preferably free-radical addition polymerization techniques, as in well-known to those of ordinary skill in the art. The poly(meth)acrylate backbone may be formed in linear or branched form, for example by varying the (co)polymerization reaction conditions or the types of comonomers present, for example, through the use of branching agents containing two or more ethylenically unsaturated groups, as is known by those of ordinary skill in the art. Exemplary (meth)acrylate monomers which may be (co)polymerized to form the poly(meth)acrylate backbone include, but are not limited to:
- alkyl, aryl, or arylalkyl (meth)acrylates including (meth)acrylates of (i) straight chain alkyl alcohols having 1 to 22 carbon atoms, preferably 2 to 16 carbon atoms, preferably 3 to 12 carbon atoms, (ii) branched chain or cyclic alkyl alcohols having 3 to 22 carbon atoms, preferably 5 to 16 carbon atoms, preferably 6 to 12 carbon atoms, (iii) aryl alcohols having 6 to 22 carbon atoms, preferably 8 to 16 carbon atoms, preferably 10 to 12 carbon atoms, (iv) arylalkyl alcohols having 7 to 22 carbon atoms, preferably 8 to 16 carbon atoms, preferably 10 to 14 carbon atoms; and (v) alkoxylated (e.g., ethoxylated or propoxylated) variants of any alcohol mentioned above; such as those (meth)acrylates formed from methyl, ethyl, propyl, n-butyl, sec-butyl, t-butyl, hexyl, ethylhexyl, stearyl, lauryl, cyclohexyl, isobornyl, dicyclopentadienyl, and t-butylcyclohexyl, phenyl alcohols, and the like, as well as alkoxylated variants thereof, with specific mention being made to methyl acrylate, ethyl acrylate, isopropyl acrylate, n-butyl acrylate, tert-butyl acrylate, cyclohexyl acrylate, 2-ethylhexyl acrylate, tridecyl acrylate, stearyl acrylate, isostearyl acrylate, behenyl acrylate, methyl methacrylate, ethyl methacrylate, isopropyl methacrylate, n-butyl methacrylate, tert-butyl methacrylate, cyclohexyl methacrylate, 2-ethylhexyl methacrylate, tridecyl methacrylate, stearyl methacrylate, isostearyl methacrylate, behenyl methacrylate, and combinations thereof;
- (meth)acrylate monomers which carry at least one hydroxyl group and/or amino group per molecule including hydroxyalkyl monoesters of (meth)acrylic acid, aminoalkyl monoesters of (meth)acrylic acid, and (poly)alkylene glycol monoesters of (meth)acrylic acid, in which the hydroxyalkyl group, aminoalkyl group, or (poly)alkylene glycol group contains 2 to 22 carbon atoms, preferably 3 to 16 carbon atoms, preferably 4 to 12 carbon atoms, with specific mention being made to 4-hydroxycyclohexylacrylate, 4-hydroxycyclohexylmethacrylate, 1,6-hexanediol monoacrylate, 1,6-hexanediol monomethacrylate, 2-[(1',1',1'-trifluoro-2'-(trifluoromethyl)-2'-hydroxy)propyl]-3-norbornyl methacrylate, 1,4-cyclohexanedimethanol monoacrylate, and mixtures thereof;
- (meth)acrylate monomers which carry at least one carboxylic acid group per molecule, such as acrylic acid and methacrylic acid; and
- and mixtures thereof.

Other ethylenically unsaturated monomer types which may be copolymerized in addition to the (meth)acrylate monomers mentioned above to produce the poly(meth)acrylate backbone of the polyether macromer-modified poly(meth)acrylate (C) include, but are not limited to, (meth)acrylamides such as N-cyclohexyl(meth)acrylamide and N,N-cyclohexylmethyl(meth)acrylamide; vinyl or allyl monomers including N-vinylamides (e.g., N-vinyl-2-pyrrolidone and N-vinyl-2-caprolactam); vinyl ether monomers (e.g., hydroxybutyl vinyl ether, cyclohexyl vinyl ether); styrenes (e.g., styrene, α-methylstyrene, and vinyltoluene); vinyl ketones having 3 to 20 carbon atoms; branching agents containing two or more ethylenically unsaturated groups (e.g., divinylbenzene, DVB) which may be used in conjunction with a chain transfer agent (e.g., dodacanethiol); as well as allyl variants of any of these mentioned above; and combinations thereof. When other ethylenically unsaturated monomer types are employed, the poly(meth)acrylate backbone is formed predominantly (>50 wt. %) from polymerization of (meth)acrylate monomers.

### <(ii) polyether macromer side chain>

The polyether macromer-modified poly(meth)acrylate (C) contains at least one polyether macromer side chain, which is based on a polyalkylene glycol oligomer or polymer, for example those formed from ring opening polymerization of one or more of ethylene oxide (EO), propylene oxide (PO), and/or butylene oxide (BO), including copolymers such as block copolymers thereof. Preferably, the polyether macromer side chain is a polyethylene glycol or a polyethylene glycol-polypropylene glycol copolymer which extends from the poly(meth)acrylate backbone. Polyether macromers may be modified to include at least one ethylenically unsaturated end group, in particular a (meth)acrylate end group, for example by esterifying a terminal hydroxyl group of the polyalkylene glycol with (meth)acrylic acid, for incorporation into the poly(meth)acrylate backbone via the macromer method.

The one or more polyether macromer side chains attached to the poly(meth)acrylate backbone each typically have a number average molecular weight in the range of at least 100 g/mol, preferably at least 200 g/mol, preferably at least 300 g/mol, preferably at least 400 g/mol, more preferably at least 500 g/mol, even more preferably at least 600 g/mol, yet even more preferably at least 700 g/mol, and up to 20,000 g/mol, preferably up to 17,500 g/mol, preferably up to 15,000 g/mol, preferably up to 12,500 g/mol, preferably up to 10,000 g/mol, preferably up to 7,500 g/mol, preferably up to 5,000 g/mol, more preferably up to 2,500 g/mol, even more preferably up to 1,500 g/mol, yet even more preferably up to 1,000 g/mol, for example as determined by GPC analysis.

### <(iii) silicone macromer side chain>

The polyether macromer-modified poly(meth)acrylate (C) may optionally also be modified with silicone macromer side chains. The silicone macromer side chains may be based on any organosilicon polymer or oligomer (polyorganosiloxane) of linear structure, of variable molecular weight, which can be formed from polymerization and/or polycondensation of suitably functionalized silanes, and which has a polysiloxane backbone structure (silicon atoms are linked together via oxygen atoms, -Si-O-Si-), with alkyl, aryl, and/or arylalkyl groups directly bonded to the (tetravalent) silicon atoms. For example, the polyorganosiloxane backbone may be a polydimethylsiloxane backbone (where each silicon atom in the backbone is directly bonded to two methyl groups), a poly(dimethylsiloxane-co-methylphenylsiloxane) backbone, a poly(dimethylsiloxane-co-diphenylsiloxane) backbone, or a poly(dimethylsiloxane-co-methylalkylsiloxane) backbone.

The silicone macromer may be modified to include at least one ethylenically unsaturated group (e.g., (meth)acrylate-containing group), preferably the silicone macromer may be end group modified to include an ethylenically unsaturated group on at least one of the ends of the polysiloxane chain. In some embodiments, the silicone macromer has an ethylenically unsaturated group on both ends of the polysiloxane chain. In some embodiments, the silicone macromer has an ethylenically unsaturated group on one end of the polysiloxane chain and a non-polymerizable end group (e.g., trimethyl silane, triphenyl silane, phenyldimethylsilane, etc.) on the other end of the chain. In some embodiments, the ethylenically unsaturated group may be a styrenyl-type group (CH₂=C(R₁)-arylene-) or a (meth)acrylate group, in particular a group represented by CH₂=CR₁-CO-O-R₂-, wherein R₁ is a hydrogen or a methyl group and R₂ is a divalent, linear or branched hydrocarbon group having 1 to 10 carbon atoms, preferably 2 to 8 carbon atoms, preferably 3 to 6 carbon atoms, and optionally containing ether bonds therein (e.g., one, two, three, four, etc. ether bonds), and optionally containing hydroxyl group substituent(s) (e.g., as in the case of ring-opened products resulting from reaction between an epoxide and (meth)acrylic acid). In preferred embodiments, R₂ is -(CH₂)ₙ- with n = 1 to 10, -CH₂CH(CH₃)CH₂-, - CH₂CH₂OCH₂CH₂-, -CH₂CH₂OCH₂CH₂CH(CH₃)CH₂-, -CH₂CH₂OCH₂CH₂OCH₂CH₂CH₂-, and - CH₂CH(OH)CH₂OCH₂CH₂CH₂-. Such an ethylenically unsaturated end group(s) enables the silicone macromer to be incorporated into the poly(meth)acrylate backbone via the macromer method.

When the polyether macromer-modified poly(meth)acrylate (C) contains one or more silicone macromer side chains attached to the (meth)acrylate backbone, each silicone macromer side chain typically has a number average molecular weight in the range of at least 150 g/mol, preferably at least 200 g/mol, preferably at least 300 g/mol, preferably at least 400 g/mol, more preferably at least 500 g/mol, even more preferably at least 750 g/mol, yet even more preferably at least 1,000 g/mol, and up to 40,000 g/mol, preferably up to 30,000 g/mol, preferably up to 20,000 g/mol, preferably up to 15,000 g/mol, preferably up to 10,000 g/mol, preferably up to 7,500 g/mol, more preferably up to 5,000 g/mol, even more preferably up to 2,500 g/mol, yet even more preferably up to 1,500 g/mol, for example as determined by GPC analysis.

In some embodiments, a total weight of the macromer side chains (the total weight of the one or more polyether macromer side chains or the total weight of the one or more polyether macromer side chains plus the total weight of the one or more silicone macromer side chains), ranges from at least 0.1 wt. %, preferably at least 0.5 wt. %, preferably at least 1 wt. %, preferably at least 1.5 wt. %, preferably at least 2 wt. %, preferably at least 2.5 wt. %, more preferably at least 3 wt. %, even more preferably at least 3.5 wt. %, yet even more preferably at least 4 wt. %, and up to 60 wt. %, preferably up to 50 wt. %, preferably up to 40 wt. %, preferably up to 30 wt. %, preferably up to 20 wt. %, more preferably up to 15 wt. %, even more preferably up to 10 wt. %, yet even more preferably up to 5 wt. %, based on a total weight of the polyether macromer-modified poly(meth)acrylate (C).

Suitable examples of the polyether macromer-modified poly(meth)acrylate (C) include, but are not limited to, BYK-3560, available from BYK, which is a silicone- and fluorine-free polyether macromer-modified polyacrylate (based on a highly branched polyacrylate backbone), and BYK-3565, available from BYK, which is a polyether macromer- and silicone macromer-modified polyacrylate (based on a linear polyacrylate backbone).

As will become clear, it has been unexpectedly discovered that a specific type of surfactant - the polyether macromer-modified poly(meth)acrylate (C) - is capable of stably emulsifying the various water-insoluble components of the aqueous energy curable inkjet inks (e.g., the water-insoluble photopolymerizable compound(s) (A)) and furnishing inks with jettable viscosity (see e.g., Table 2, Examples 1 and 2). On the other hand, it has been found that other types of surfactants, including those common to inkjet inks (e.g., see EP 2,703,459B1 - incorporated herein by reference in its entirety), fail to generate stable emulsions (inks separate into oil and water phases) and/or jettable inks in terms of viscosity (see e.g., Table 2, Comparative Examples 1-17). Examples of these other surfactant types include, but are not limited to,
- polyether modified siloxanes including silicone-glycol copolymers such as SILTECH C-20, C-42, C-101, C-241, C-442, and C-468, available from Siltech Corporation, BYK-301 (polyether modified dimethylsiloxane), BYK-307 (polyether modified dimethylsiloxane), BYK-333, BYK-348, BYK-377 (polyether modified dimethylsiloxane), each available from available from BYK;
- organomodified silicones (e.g., alkyl and/or aryl modified silicones) such as SILTECH C-32, available from Siltech Corporation, and COATOSIL 1211C and 3573, available from Momentive;
- photo-cross-linkable silicone acrylates or silicone polyether acrylates such as TEGO RAD 2100, TEGO RAD 2200, TEGO RAD 2250, TEGO RAD 2300 (silicone polyether acrylate), each available from Evonik Industries, and BYK-UV 3500 and 3530, available from BYK;
- polyacrylates including polyacrylate copolymers and cross-polymers such as BYK-381 and BYK-361N (polyacrylate copolymer), each available from BYK, PEMULEN EZ-4U (acrylate/C10-C30 alkyl acrylate crosspolymer) and PEMULEN TR-2 (acrylic acid/C10-C30 alkyl acrylate crosspolymer), each available from Lubrizol;
- fluoropolymers such as FC-4430 and FC-4432, available from 3M Corporation;
- acetylenic diol and acetylenic glycol-based gemini surfactants such as SURFYNOL SEF and DYNOL surfactants, available from Evonik Industries;
- polysiloxane-based gemini surfactants such as TEGO TWIN 4100, available from Evonik Industries;
- non-ionic polyethers for example as substrate wetting surfactants such as TEGO WET 510 (hydrophilic polyether substrate wetting surfactant), available from Evonik Industries;
- alkoxylated fatty alcohols such as BIO-SOFT N-600 (C12-C13 alcohol ethoxylate), MAKON DA-4 (ethoxylated isodecyl alcohol), MERPOL SE (alcohol ethoxylate), and POLYSTEP TD-6 (ethoxylated tridecyl alcohol), each available from Stepan;
- polysorbates including mono-, bi- or tri-fatty acid esterified polysorbates such as TOXIMUL SEE-340 (sorbitan trioleate ethoxylate (20)), available from Stepan; and
- glycosides of fatty alcohols such as PLANTASENS NATURAL EMULSIFIER HE20 (cetearyl glucoside, sorbitan olivate), available from Clariant.

So while other types of surfactants are not excluded from use in the disclosed aqueous energy curable inkjet inks, their optional use is to be accompanied by the polyether macromer-modified poly(meth)acrylate (C) for acceptable emulsification and viscosity. When employed, these other types of surfactants may be included in amounts of up to 10 wt. %, preferably up to 9 wt. %, preferably up to 8 wt. %, preferably up to 7 wt. %, preferably up to 6 wt. %, preferably up to 5 wt. %, preferably up to 4 wt. %, more preferably up to 3 wt. %, even more preferably up to 2 wt. %, preferably up to 1 wt. %, preferably up to 0.5 wt. %, preferably up to 0.1 wt. %, based on a total weight of the aqueous energy curable inkjet inks. In preferred embodiments, the aqueous energy curable inkjet inks are substantially free of surfactants other than the polyether macromer-modified poly(meth)acrylate (C).

In case there is any overlap between surfactants (e.g., polyether macromer-modified poly(meth)acrylate (C)) and the resin (B), either photopolymerizable resins (B1) or non-photopolymerizable resins (B2), these materials are contemplated for providing differing functions and are thus considered to be separate and distinct ingredients in the present disclosure. For example, resins (B) primarily provide film-forming properties to the aqueous energy curable inkjet inks after drying/curing, while surfactants primarily provide emulsification, detergency, surface-energy increases, anti-cratering, leveling, substrate wetting, slip, and/or defoaming properties.

### Solvent system

Water (D) is present in the disclosed aqueous energy curable inkjet inks. Typically water is present in an amount of at least 25 wt. %, preferably at least 27 wt. %, preferably at least 29 wt. %, more preferably at least 30 wt. %, even more preferably at least 32 wt. %, yet even more preferably at least 34 wt. %, and up to 65 wt. %, preferably up to 60 wt. %, preferably up to 55 wt. %, preferably up to 50 wt. %, more preferably up to 45 wt. %, even more preferably up to 40 wt. %, yet even more preferably up to 38 wt. %, based on a total weight of the aqueous energy curable inkjet inks. It is preferred that water (D) constitutes all or a majority of the solvent system used in the aqueous energy curable inkjet inks herein.

Compatible organic solvent(s) (D1) may be optionally employed in the aqueous energy curable inkjet ink. The inclusion of one or more organic solvents (D1) may aid solvation of certain components and provide the aqueous energy curable inkjet ink with acceptable volatility for the purposes of improved dry times. In some embodiments, the organic solvent (D1) is present in the aqueous energy curable inkjet inks in an amount of at least 0.1 wt. %, preferably at least 0.5 wt. %, preferably at least 1 wt. %, preferably at least 2 wt. %, preferably at least 4 wt. %, more preferably at least 6 wt. %, even more preferably at least 8 wt. %, yet even more preferably at least 10 wt. %, and up to 35 wt. %, preferably up to 30 wt. %, preferably up to 25 wt. %, preferably up to 20 wt. %, preferably up to 18 wt. %, preferably up to 16 wt. %, more preferably up to 15 wt. %, even more preferably up to 14 wt. %, yet even more preferably up to 13 wt. %, based on a total weight of the aqueous energy curable inkjet inks.

Exemplary organic solvents (D1) include, but are not limited to:
- lower alcohols containing from 1 to 8 carbon atoms, such as methanol, ethanol, 1-propanol, 2-propanol, 1-butanol, 2-butanol;
- glycols such as ethylene glycol, diethylene glycol, triethylene glycol, tetraethylene glycol, propylene glycol, dipropylene glycol;
- glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol mono-n-propyl ether, ethylene glycol mono-isopropyl ether, diethylene glycol mono-isopropyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, propylene glycol monomethyl ether, propylene glycol monoethyl ether, propylene glycol mono-t-butyl ether, propylene glycol mono-n-propyl ether, propylene glycol mono-isopropyl ether, propylene glycol mono-n-butyl ether, dipropylene glycol mono-n-butyl ether, dipropylene glycol monomethyl ether, dipropylene glycol monoethyl ether, dipropylene glycol mono-n-propyl ether, and dipropylene glycol mono-isopropyl ether;
- ethers (non-glycol ethers), for example ethers containing 4 to 8 carbon atoms such as diethyl ether, dipropyl ether, methyl tert-butyl ether, dibutyl ether, dioxane, and tetrahydrofuran;
- ketones, for example ketones containing 3 to 6 carbon atoms, including acetone, methyl ethyl ketone, 3-pentanone, cyclohexanone, and diacetone alcohol;
- esters, including those having 3 to 8 carbon atoms, for example methyl acetate, ethyl acetate, n-butyl acetate, methyl lactate, ethyl lactate, butyl lactate, methoxyethyl acetate, ethoxyethyl acetate, methoxypropyl acetate, ethoxypropyl acetate;
- as well as mixtures thereof.

**In** preferred embodiments, when an organic solvent (D1) is employed, the organic solvent is preferably a glycol, preferably propylene glycol.

### (E) Pigment

The disclosed aqueous energy curable inkjet inks may be formulated to have any desirable color through appropriate selection of one or more pigments (E). It is to be readily appreciated by those of ordinary skill in the art that the aqueous energy curable inkjet inks are not limited to any particular color, and acceptable colors may include, but are not limited to, cyan, magenta, yellow, and key (black) ("CMYK"), white (including various shades of white such as pure white, eggshell, cream, ivory, etc.), red, blue, orange, green, light cyan, light magenta, and violet. **In** general, the pigment (E) may be employed in amounts of at least 0.1 wt. %, preferably at least 0.5 wt. %, more preferably at least 1 wt. %, even more preferably at least 2 wt. %, yet even more preferably at least 3 wt. %, and up to 20 wt. %, preferably up to 15 wt. %, more preferably up to 10 wt. %, even more preferably up to 8 wt. %, yet even more preferably up to 7 wt. % relative to the total weight of the aqueous energy curable inkjet inks.

The pigment (E) utilized herein is generally of a size small enough that it can be reliably jetted from a printhead without substantially clogging print nozzles, capillaries, or other components of print equipment, and large enough so as not to increase the viscosity of the aqueous energy curable inkjet inks to an unacceptable level. The acceptable average particle size of the pigment (E) may range from at least 50 nm, preferably at least 60 nm, preferably at least 70 nm, preferably at least 80 nm, preferably at least 85 nm, preferably at least 90 nm, preferably at least 100 nm, preferably at least 120 nm, preferably at least 140 nm, more preferably at least 160 nm, even more preferably at least 180 nm, yet even more preferably at least 200 nm, and up to 300 nm, preferably up to 280 nm, more preferably up to 260 nm, even more preferably up to 240 nm, yet even more preferably up to 220 nm. For example, when a white pigment is utilized, the white pigment may typically have an average particle size of 200 to 300 nm, and when a black or colored pigment is utilized, the black/colored pigment may typically have an average particle size of 100 to 200 nm. Commercial pigments may be used as obtained or may be ground and sieved to meet the desired particle size specifications. Laser diffraction and/or scanning electron microscopy methods may be used to measure the pigment particle sizes, for example.

**In** some embodiments, the pigment (E) employed herein has a D₁₀ particle size (size in which 10% of particles are smaller and 90% of particles are larger) of at least 40 nm, preferably at least 50 nm, more preferably at least 60 nm, even more preferably at least 70 nm, and up to 100 nm, preferably up to 90 nm, more preferably up to 80 nm, even more preferably up to 75 nm. **In** preferred embodiments, the disclosed aqueous energy curable inkjet inks do not contain any pigments (E) having a particle size of less than 85 nm, preferably less than 80 nm, preferably less than 70 nm, preferably less than 60 nm, preferably less than 50 nm, preferably less than 45 nm, more preferably less than 40 nm, even more preferably less than 35 nm, yet even more preferably less than 30 nm.

**In** some embodiments, the pigments (E) are coated, for example with an organic coating such as a resin, e.g., those resin coatings described in US 2013/0050366 A1 - incorporated herein by reference in its entirety, or an inorganic coating such as silica, alumina, alumina-silica, boric acid, and zirconia coatings. **In** some embodiments, the pigments (E) are coated with a steric repulsion layer, an electrostatic repulsion layer, or both. Preferred pigments of the present disclosure are uncoated, for example, are pigments which are not coated with an organic coating such as a resin or an inorganic coating such as silica, alumina, alumina-silica, boric acid, and zirconia coatings.

Specific examples of pigments (E) which may be used herein include, but are not limited to, colored pigments such as PALIOGEN Violet 5100 (available from BASF), HELIOGEN Green L8730 (available from BASF), SUNFAST Blue 15:3 and 15:4 (available from Sun Chemical), LITHOL Fast Scarlet L4300 (available from BASF), SUNBRITE orange, red, and yellow pigments (available from Sun Chemical), HELIOGEN Blue L6900 (available from BASF), PALIOGEN Blue L6470 (available from BASF), NOVO PERM Yellow FGL (available from Clariant), Ink Jet Yellow 4G (available from Clariant), and CINQUASIA Magenta D4535 (available from BASF); black pigments and carbon blacks such as PALIOGEN Black L0086 (available from BASF), REGAL 330 (available from Cabot), MOGUL L and REGAL 400R (available from Cabot), carbon black PBL 7 (available from Cabot), and PAK512CL170423-C1 (available from Kao Specialty Chemicals), which is a dispersion of carbon black pigment PB 7 (available from Cabot) in water and 2-hydroxyethyl acrylate; white pigments such as pigment white 1 (lead hydroxide carbonate), pigment white 3 (lead sulfate), pigment white 4 (zinc oxide), pigment white 5 (lithopone), pigment white 6 (titanium dioxide), pigment white 7 (zinc sulfide), pigment white 10 (barium carbonate), pigment white 11 (antimony trioxide), pigment white 12 (zirconium oxide), pigment white 14 (bismuth oxychloride), pigment white 17 (bismuth subnitrate), pigment white 18 (calcium carbonate), pigment white 19 (kaolin), pigment white 21 (barium sulfate), pigment white 24 (aluminum hydroxide), pigment white 25 (calcium sulfate), pigment white 27 (silicon dioxide), pigment white 28 (calcium metasilicate), and pigment white 32 (zinc phosphate cement); as well as mixtures thereof.

### (F) Photoinitiator

The aqueous energy curable inkjet inks may be optionally formulated for curing with accelerated particle radiation (e.g., electron beam curing), and thus the use of photoinitiators is not required. When designed to be cured with an accelerated particle curing stimulus such as EB curing, the aqueous energy curable inkjet inks may include, but are preferably substantially free of photoinitiator(s) (F), more preferably completely free of photoinitiator(s) (F) (e.g., 0 wt. %).

When the aqueous energy curable inkjet inks will be subject to an actinic curing stimulus such as UV energy, the use of a photoinitiator(s) (F) may be required for a sufficient cure. Therefore, the aqueous energy curable inkjet inks may contain a photoinitiator (F), as needed, in amounts of up to 5 wt. % of a photoinitiator (F), for example, at least 0.05 wt. %, preferably at least 0.1 wt. %, preferably at least 0.2 wt. %, preferably at least 0.4 wt. %, more preferably at least 0.6 wt. %, even more preferably at least 0.8 wt. %, yet even more preferably at least 1 wt. %, and up to 10 wt. %, preferably up to 8 wt. %, preferably up to 5 wt. %, preferably up to 4 wt. %, preferably up to 3 wt. %, more preferably up to 2.5 wt. %, even more preferably up to 2 wt. %, yet even more preferably up to 1.5 wt. %, based on a total weight of the aqueous energy curable inkjet inks.

Because the polyether macromer-modified poly(meth)acrylate (C) provides effective emulsification, the aqueous energy curable inkjet inks are generally open to any photoinitiator (F) that provides a suitable cure, whether it is water-soluble or water-insoluble. When referencing photoinitiators (F) in the present disclosure, "water-soluble" refers to those which have a solubility in water at 25 °C of at least 5.0 g/L, while "water-insoluble" refers to those which have a solubility in water at 25 °C of less than 5.0 g/L. Suitable examples of photoinitiators (F) that may be used include, but are not limited to:
- α-hydroxyketones such as 1-[4-(2-hydroxyethoxyl)-phenyl]-2-hydroxy-2-methylpropanone (e.g., OMNIRAD 2959, formerly Irgacure 2959, which is water-soluble, available from IGM resins), 1-hydroxycyclohexylphenyl ketone (e.g., GENOCURE CPK, available from Rahn), and 1-phenyl-2-hydroxy-2-methyl propanone (e.g., OMNIRAD 73, available from IGM resins);
- benzoyl phosphinates such as ethyl(2,4,6-trimethylbenzoyl)-phenyl phosphinate (e.g., OMNIRAD TPO-L, which is water-insoluble, available from IGM resins);
- acyl and bis-acyl phosphine oxides such as phenylbis(2,4,6-trimethylbenzoyl)phosphine oxide (e.g., OMNIRAD 819, which is water-insoluble, available from IGM resins), 2,4,6-trimethylbenzoyl-diphenyl-phosphine oxide (e.g., GENOCURE TPO, available from Rahn), and bis(2,6-dimethoxybenzoyl)-2,4,4-trimethylpentyl phosphine oxide;
- alkylphenones such as 2-benzyl-2-(dimethylamino)-4'-morpholinobutyrophenone (e.g., GENOCURE BDMM, available from Rahn), 2-dimethylamino-2-(4-methylbenzyl)-1-(4-morpholin-4-yl-phenyl)-butan-1-one (e.g., OMNIRAD 379, formerly Irgacure 379, available from IGM resins), 2-methyl-1[4-(methylthio)phenyl]-2-morpholinopropan-1-one (e.g., OMNIRAD 907, formerly Irgacure 907, available from IGM resins), 2-hydroxy-2-methylpropiophenone, 2,2-dimethyl-2-hydroxyacetophenone, 2,2-dimethoxy-2-phenylacetophenone (e.g., OMNIRAD BDK, available from IGM resins), and 2-methyl-1-[4-(methylthio)phenyl]-2-morpholino-propan-1-one;
- benzophenones such as trimethylbenzophenone and methylbenzophenone;
- phenylglyoxylates such as oxy-phenyl-acetic acid 2-[2-oxo-2-phenyl-acetoxy-ethoxy]-ethyl ester and oxy-phenyl acetic acid 2-[2-hydroxy-ethoxy]-ethyl ester (e.g., OMNIRAD 754, available from IGM resins;
- thioxanthones such as 2,4-diethyl thioxanthone (e.g., GENOCURE DETX, which is water-insoluble) and isopropylthioxanthone (e.g., GENOCURE ITX), each available from Rahn); and
- combinations thereof.

Preferred photoinitiators (F) are GENOCURE DETX, GENOCURE TPO, and GENOCURE ITX, each available from Rahn, and OMNIRAD TPO-L, OMNIRAD 819, OMNIRAD 2959, OMNIRAD 379, and OMNIRAD 907, each available from IGM resins.

### (G) Wax

The aqueous energy curable inkjet inks herein may be optionally formulated with a wax (G), for example, to improve various properties related to the handling of printed articles made using the aqueous energy curable inkjet inks, such as slip or lubrication, rub, scratch, or abrasion resistance, and anti-blocking (stackability). The inclusion of a wax (G) is optional, but when included, the wax (G) may be used in an amount of at least 0.05 wt. %, preferably at least 0.1 wt. %, preferably at least 0.2 wt. %, preferably at least 0.4 wt. %, preferably at least 0.6 wt. %, preferably at least 0.8 wt. %, more preferably at least 1 wt. %, even more preferably at least 2 wt. %, yet even more preferably at least 3 wt. %, and up to 15 wt. %, preferably up to 10 wt. %, preferably up to 8 wt. %, more preferably up to 7 wt. %, even more preferably up to 6 wt. %, yet even more preferably up to 5 wt. %, based on a total weight of the aqueous energy curable inkjet inks.

The wax (G) may be a plant and animal-based wax such as candeli wax, beeswax, rice wax, and lanolin; a petroleum-based wax such as paraffin wax, microcrystalline wax, polyethylene wax, polyethylene oxide wax, and petrolatum; a mineral-based wax such as montan wax and ozocerite; a synthesized wax such as carbon wax, Hoechst wax, polyolefin wax, and stearic acid amide (e.g., ethylene bis(stearamide)) wax, including synthesized copolymeric waxes such as α-olefin maleic anhydride copolymers; and the like as well as dispersions/emulsions of any of the above waxes. Although the wax (G) may meet the definition of a non-photopolymerizable resin (B2), the wax (G) is considered to be a separate and distinct component/material in the present disclosure, at least because of the different properties of waxes compared to non-waxy polymers, such as gradual (ill-defined) melting points.

The preferred wax (G) of the present disclosure is polyolefin wax (synthesized). Preferably, the polyolefin wax is completely non-polar and linear polyolefin wax which is unmodified (e.g., not oxidized, acid-modified, or modified with a specialty monomer) and which has a narrow molecular weight distribution. Particularly preferred waxes (G) are those which are polyolefin wax emulsions. The polyolefin wax may be micronized, for example, having a D₅₀ particle size of at least 1 µm, preferably at least 2 µm, preferably at least 3 µm, more preferably at least 4 µm, even more preferably at least 5 µm, yet even more preferably at least 5.5 µm, and up to 50 µm, preferably up to 40 µm, preferably up to 30 µm, preferably up to 20 µm, preferably up to 15 µm, preferably up to 12.5 µm, more preferably up to 10 µm, even more preferably up to 8 µm, yet even more preferably up to 6 µm.

Suitable examples of the polyolefin wax include, but are not limited to, polyethylene wax, preferably a high density polyethylene wax, more preferably a micronized high density polyethylene wax; and a polypropylene wax, preferably a metallocene-based polypropylene wax, more preferably a micronized metallocene-based polypropylene wax, with specific mention being made to JCCL-PE wax, made by Kao Corp. Japan, which is in turn made from HYTEC-E-6500 (polyethylene wax, available from TOHO Chemical Industry, Co.), CERIDUST 3610 (a micronized high density polyethylene wax), and CERIDUST 6050M (a micronized metallocene-based polypropylene wax), each available from Clariant.

It has been found that the polyolefin waxes described above, when incorporated into the aqueous energy curable inkjet inks, produce printed images with advantageous handling related properties while not disturbing the stability of the aqueous energy curable inkjet inks themselves. On the other hand, other types of synthetic waxes such as polytetrafluoroethylene (Teflon) waxes (e.g., NANOFLON 119N, available from Shamrock) and other types of plant and animal-based waxes such as carnauba waxes (e.g., CERASPERSE UV 636, formerly EVERGLIDE UV 636, which is carnauba wax dispersed in the UV monomer tri(propylene glycol) diacrylate, available from Shamrock) cause ink instability and result in separation of the inks into layers soon after mixing.

### (H) Silane

One or more silanes (H) may be optionally included in the aqueous energy curable inkjet inks, for example to function as adhesion promoters. Useful silanes (H) are those which have multiple reactive sites (multi-functional) capable of reacting with organic functionalities found on the various components in the aqueous energy curable inkjet inks as well as the substrate, for example to promote crosslinking and/or adhesion of the ink components to the substrate.

The silane (H) may be a small molecule silane containing at least 1 reactive silane group or a silane oligomer (partially hydrolyzed and condensed silane containing relatively few repeating units) containing at least 3 reactive silane groups. For example, the silane (H) may contain up to 6, preferably up to 5, preferably up to 4, preferably up to 3 reactive silane groups. The reactive silane group(s) present in the silane (H) may be any which have at least one hydrolyzable group bonded directly to a Si atom. Hydrolyzable groups include, but are not limited to, alkoxy groups (e.g., methoxy, ethoxy, propoxy, isopropoxy, t-butoxy, as well as substituted variants, as well as mixtures of one or more of these groups) and halo groups (e.g., chloro, bromo), including mixtures of alkoxy and halo groups. Each reactive silane group may therefore have one, two, or three hydrolyzable groups, which may be the same or different, preferably the same, more preferably each hydrolyzable group present is a methoxy.

The silane (H) may be multi-functional of a singular type and contain a plurality of reactive silane groups, which are the only groups capable of reacting with organic functionalities found in the aqueous energy curable inkjet inks/substrate. For example, the silane (H) may be a isocyanurate containing silane, preferably a tris(3-(trialkoxysilyl)alkyl) isocyanurate (e.g., such as those described in US 9,617,454B2 - incorporated herein by reference in its entirety), more preferably a tris(3-(trimethoxysilyl)alkyl) isocyanurate, even more preferably a tris(3-(trimethoxysilyl)propyl) isocyanurate (e.g., SILQUEST A-LINK 597, available from Momentive).

Alternatively, the silane (H) may be mixed multi-functional and contain one or more reactive silane groups in addition to one or more other types of reactive sites which are capable of reacting with organic functionalities found on the various components in the aqueous energy curable inkjet inks as well as the substrate. For example, the silane (H) may be an epoxy functional silane (containing reactive silane group(s) and reactive epoxy group(s)). In particular, the silane (H) may be an epoxyalkyltrialkoxy silane, preferably an epoxyalkyltrimethoxy silane; a glycidoxyalkyltrialkoxy silane, preferably a glycidoxyalkyltrimethoxy silane; or an epoxy functional (alkoxy)silane oligomer, preferably a glycidoxyalkyl(alkoxy)silane oligomer, more preferably a glycidoxyalkyl(methoxy)silane oligomer; with specific mention being made to SILQUEST A-186 (beta-(3,4-epoxycyclohexyl)ethyltrimethoxysilane), SILQUEST A-187 (gammaglycidoxypropyltrimethoxysilane), and COATOSIL MP 200 silane (a gamma-glycidoxypropyl(methoxy)silane oligomer), each available from Momentive.

Generally, if present, the amount of silane (H) employed in the aqueous energy curable inkjet ink ranges from at least 0.05 wt. %, preferably at least 0.1 wt. %, preferably at least 0.2 wt. %, preferably at least 0.4 wt. %, more preferably at least 0.6 wt. %, even more preferably at least 0.8 wt. %, yet even more preferably at least 1 wt. %, and up to 5 wt. %, preferably up to 4 wt. %, more preferably up to 3 wt. %, even more preferably up to 2 wt. %, yet even more preferably up to 1.7 wt. %, based on a total weight of the aqueous energy curable inkjet inks.

### (I) Additives

The aqueous energy curable inkjet inks of the present disclosure may also be optionally formulated with various additives to improve various ink characteristics and performance. For example, the aqueous energy curable inkjet inks may optionally contain one or more of an optical brightener, a stabilizer, a security taggant, a humectant, a photosensitizer, a fungicide, a pH adjusting agent, an anti-fading agent, or any other ink additive known to be used in water-based ink systems.

Each additive may be optionally included in art recognized usage amounts, for example, each additive may be added in an amount of from 0.0001 wt. %, preferably from 0.001 wt. %, preferably from 0.01 wt. %, preferably from 0.1 wt. %, more preferably from 0.5 wt. %, even more preferably from 1 wt. %, yet even more preferably from 2 wt. %, and up to 10 wt. %, preferably up to 9 wt. %, preferably up to 8 wt. %, preferably up to 7 wt. %, preferably up to 6 wt. %, more preferably up to 5 wt. %, even more preferably up to 4 wt. %, yet even more preferably up to 3 wt. %, based on a total weight of the aqueous energy curable inkjet inks.

### (J) Water-soluble photopolymerizable compound

In addition to the water-insoluble photopolymerizable compound(s) (A), the aqueous energy curable inkjet inks of the present disclosure may be optionally formulated with one or more water-soluble photopolymerizable compounds, i.e., water-soluble photopolymerizable monomers and/or oligomers containing at least one ethylenically-unsaturated group and having a solubility in water at 25 °C of at least 50 g/L. When present, the water-soluble photopolymerizable compound (J) may be included in the aqueous energy curable inkjet inks in an amount of at least 0.1 wt. %, preferably at least 0.5 wt. %, preferably at least 1 wt. %, preferably at least 1.5 wt. %, preferably at least 2 wt. %, more preferably at least 2.5 wt. %, even more preferably at least 3 wt. %, yet even more preferably at least 5 wt. %, and up to 15 wt. %, preferably up to 12 wt. %, more preferably up to 10 wt. %, even more preferably up to 8 wt. %, yet even more preferably up to 6 wt. %, based on a total weight of the aqueous energy curable inkjet ink.

The water-soluble photopolymerizable compound (J) may be:
- a water-soluble mono-ethylenically unsaturated monomer, including hydroxyalkyl mono(meth)acrylates such as hydroxyethyl(meth)acrylate, hydroxypropyl(meth)acrylate, and 2-hydroxy-3-phenyloxypropyl(meth)acrylate, mono(meth)acrylates containing (poly)alkylene glycol functionality, preferably (poly)ethylene glycol functionality, for example those which contain at least 2 to 600 molar equivalents of an alkylene oxide (e.g., ethylene oxide) in reacted form, with specific mention being made to diethylene glycol methyl ether methacrylate (e.g., CD545), methoxy polyethylene glycol (550) monoacrylate monomer (e.g., CD553), alkoxylated tetrahydrofurfuryl acrylate (e.g., CD611), triethylene glycol ethyl ether methacrylate (e.g., CD730), 2-(2-ethoxyethoxy) ethyl acrylate (e.g., SR256), methoxy polyethylene glycol (350) monomethacrylate (e.g., SR550), and methoxy polyethylene glycol (350) monoacrylate (e.g., SR551), each available from Sartomer, and water-soluble N-vinylamides such as N-vinyl-2-pyrrolidone (e.g., V-PYROL), available from Ashland;
- a water-soluble poly-ethylenically unsaturated monomer including those based on a polyol where two, three, four, or more of the hydroxyl groups of the polyol are functionalized with photopolymerizable groups (e.g., (meth)acrylate functional groups), for example polyols such as ethylene glycol, diethylene glycol, triethylene glycol, propylene glycol, dipropylene glycol, tripropylene glycol, 1,3-propanediol, butane diols (e.g., 1,2-, 1,3-, 1,4-butanediol), pentane diols (e.g., 1,5-pentanediol), hexane diols (e.g., 1,6-hexanediol), glycerin, 1,2,4-butanetriol, trimethylolethane, trimethylolpropane, di(trimethylolpropane), pentaerythritol, dipentaerythritol, pentane triols (e.g., 1,2,5-pentane triol), hexane triols (e.g., 1,2,6-hexanetriol), neopentyl glycol, mannitol, sorbitol, glucose, fructose, mannose, sucrose, and alkoxylated adducts of any of the above-noted polyols such as those which contain at least 2 to 600 molar equivalents of an alkylene oxide (e.g., ethylene oxide) in reacted form, with specific mention being made to tetraethylene glycol diacrylate, available from Sigma-Aldrich, polyethylene glycol (400) diacrylate (e.g., SR344), polyethylene glycol (600) diacrylate (e.g., SR610), polyethylene glycol (600) dimethacrylate (e.g., SR252), polyethylene glycol (1000) dimethacrylate (e.g., SR740A), ethoxylated (6) trimethylolpropane triacrylate (e.g., SR499), ethoxylated (15) trimethylolpropane triacrylate (e.g., SR9035), and ethoxylated (20) trimethylolpropane triacrylate (e.g., SR415), each available from Sartomer;
- a water-soluble oligomer including tri-functional water soluble aliphatic urethane acrylate oligomers (e.g., SU 550A, available from Soltech LTD.);
- or a mixture thereof.

In some embodiments, the aqueous energy curable inkjet inks herein are substantially free of water-soluble photopolymerizable compounds (J). In preferred embodiments, the aqueous energy curable inkjet inks are substantially free of water-soluble photopolymerizable monomers, including both water-soluble mono-ethylenically unsaturated monomers and water-soluble poly-ethylenically unsaturated monomers.

### Properties

Inks are considered to be jettable (suitable for inkjet printing) herein when having a viscosity (in centipoise, cP) at 25 °C of 3 to 35 cP. Therefore when subject to viscosity analysis, inks which have a viscosity within this range are given a "Pass" rating (are deemed jettable/suitable for inkjet printing), while inks having a viscosity outside of this range given a "Fail" rating (are deemed not j ettable/not suitable for inkjet printing). The aqueous energy curable inkjet inks of the present disclosure receive a "Pass" rating (jettable viscosity), and thus generally have a viscosity (in centipoise, cP) at 25 °C of at least 3 cPs, preferably at least 5 cP, preferably at least 6 cP, preferably at least 8 cP, preferably at least 10 cP, preferably at least 12 cP, preferably at least 14 cP, preferably at least 16 cP, preferably at least 18 cP, and up to 35 cP, preferably up to 33 cP, preferably up to 30 cP, preferably up to 28 cP, preferably up to 26 cP, preferably up to 24 cP, preferably up to 22 cP, preferably up to 20 cP. The viscosity may be measured using, for example, a Rheometrics Fluid Rheometer RFS3, ARES rheometer, both made by Rheometrics, a division of TA Instruments, or a Haake Roto Visco 1 rheometer, Brookfield DV-E Viscometer made by AMETEK Brookfield and a TCP/P-Peltier Temperature Control Unit.

Emulsion stability of the aqueous energy curable inkjet inks can be determined by making the inks according to the method discussed hereinafter with agitation (e.g., stirring, shaking, etc.), and when agitation stops, measuring for any phase separation, for example using a graduated cylinder and measuring the volume of the oil phase that separates from the water phase. The emulsion stability of the inks may then be categorized as: Pass (no phase separation); Acceptable (slight oil/water phase separation with no more than 15 vol. % separated oil phase); Fail (oil/water phase separation with > 15 vol. % separated oil phase). The aqueous energy curable inkjet inks herein are characterized as stable emulsions, with an acceptable or pass rating, preferably a pass rating.

Adhesion can be measured by a cross hatch adhesion tape test according to ASTM D3359 - 09 - which is incorporated herein by reference in its entirety, and quantified on a 0B to 5B scale according to this standard. The aqueous energy curable inkjet inks disclosed herein provide advantageous adhesion properties on a variety of substrates, with adhesion performance ratings of 3B or higher, preferably 4B or higher, more preferably 5B.

Print quality can be determined through simple visual inspection of the printed images or by using image clarity software known by those of ordinary skill in the art, for example, Personal Image Analysis System (PIAS) software.

The drying speed of the aqueous energy curable inkjet inks can be measured according to the Examples described hereinafter, as the amount of water or other volatile components lost (in mg) per area of coverage under applied heat within a specific time (units of mg/cm²·s), for example by weighing a substrate, a fresh sample (the substrate having newly applied aqueous energy curable inkjet ink), drying at 60 °C for two minutes, then reweighing the dried sample to determine the weight loss of the aqueous energy curable inkjet inks after accounting for the weight of the substrate. The drying speed results may be expressed in terms of weight loss by subtracting a percentage of the weight of the dried aqueous energy curable inkjet ink relative to the starting weight of the newly applied aqueous energy curable inkjet ink from 100, and categorized as: 3 - Fail, slow drying (0 to < 25% weight loss); 2 - Pass, acceptable drying (25 to 35% weight loss); 1 - Pass, fast drying (>35% weight loss). The aqueous energy curable inkjet inks herein have acceptable (2) or fast (1) drying speeds, preferably fast (1) drying speeds.

The curing speed of the aqueous energy curable inkjet inks can be measured according to the Examples described hereinafter in terms of the surface condition (tack) of the inks after being subjected to (i) UV or (ii) EB curing conditions. For testing curing speeds, the aqueous energy curable inkjet inks may be subject to (i) UV cure conditions with a UV fluence (dose) of 1,000 mJ/cm² using a H-type UV bulb, or (ii) EB cure conditions with a 3.0 Mrad dose of electron beam radiation using an electron beam generator, e.g., available from Electron Crosslinking AB (Sweden), Comet AG (Switzerland) or Energy Sciences, Inc. (ESI) (USA). The surface condition (tack) of the cured inks may then be determined using touch, or alternatively, using tack measurements according to International Standard ISO 12634 - which is incorporated herein by reference in its entirety, and the inks categorized as: 3 - Fail, slow curing (Tacky, tack does not fade over time, ink can be rubbed off); 2 - Pass, acceptable curing (Slight tack, tack fades over time); 1 - Pass, fast curing (No tack). The aqueous energy curable inkjet inks herein have acceptable (2) or fast (1) curing speeds, preferably fast (1) curing speeds.

### Method of making

The aqueous energy curable inkjet inks may be prepared, for example, by combining the water-insoluble photopolymerizable compound (A), the polyether macromer-modified poly(meth)acrylate (C), the pigment (E) and any other desired optional water-insoluble ingredient (e.g. the photoinitiator (F), the silane (H), the additive (I) (e.g., optical brightener, stabilizer, security taggant, etc.)) in a first container, and the resin (B), water (D) and any desired optional water-soluble ingredient (e.g., the organic solvent (D1), the wax (G), the additive (I) (e.g., optical brightener, stabilizer, security taggant, etc.) and/or the water-soluble photopolymerizable compound (J)) may be combined in a second container. The first container may be mixed at 20 to 45°C until a uniform solution is formed. The second container may be mixed at 20 to 25°C until a uniform solution is formed. The contents of the second container may then be added to the first container with mixing at 20 to 25°C until a stable emulsion is formed.

### Printed Article

The aqueous energy curable inkjet inks can be printed on various substrates including three dimensional parts as well as flat sheets or webs that are supplied in roll form, for the manufacture of a wide variety of printed articles. Additionally, the substrates may possess various surface types, for example, a flat surface, a structured surface, such as grained surfaces, and a three-dimensional surface, such as curved and/or complex surfaces, which are notoriously difficult substrates owing to the long distance that the ink must travel to reach all parts of the curved and/or complex surface. Such printed articles may be suitable in the graphic arts, textiles, packaging (e.g., food packaging, pharmaceutical packaging, etc.), lottery, business forms and publishing industries, examples of which include a tag or label, a lottery ticket, a publication, packaging (e.g., flexible packaging), a folding carton, a rigid container (e.g., a plastic cup or tub, glass containers, metal cans, bottles, jars, and tubes), a point-of-sale display, and the like. Particularly preferred printed articles are those used for packaging, for example, thin plastic films (e.g., flexible packaging), preferably food/product packaging (e.g., primary, secondary, or tertiary food packaging) which may contain food products, non-food products, pharmaceutical, and/or personal care items.

The aqueous energy curable inkjet inks may be printed on porous or penetrable substrates, examples of which include, but are not limited to, non-coated paper, wood, membranes, and fabrics (including, for example, but not limited to, woven fabric, non-woven fabric, and foil-laminated fabric).

The aqueous energy curable inkjet inks may also be printed on non-porous or non-penetrable substrates, for example, various plastics, glass, metals (e.g., steel, aluminum, etc.), and/or non-penetration papers (e.g., coated papers). These may include, but are not limited to, molded plastic parts as well as flat sheets or rolls of plastic films. Examples include those containing polyesters such as polyethylene terephthalate (PET), biaxially oriented polystyrene (OPS), polyolefins such as polyethylene (PE), polypropylene (PP), and oriented polypropylene (OPP), polylactic acid (PLA), nylon and oriented nylon, polyvinyl chloride (PVC), cellulose triacetate (TAC), polycarbonate, acrylonitrile butadiene styrene (ABS), polyacetal, polyvinyl alcohol (PVA), and the like.

### Method of forming a printed image

The present disclosure provides a method of forming a printed image on a substrate by applying the aqueous energy curable inkjet inks, in one or more of its embodiments, onto a surface of the substrate with an inkjet printhead, drying, followed by curing the aqueous energy curable inkjet ink. Use of the aqueous energy curable inkjet inks described herein overcomes the problems common to aqueous ink systems by providing advantageous 1) drying speed, 2) print quality (related to surface defects), 3) adhesion, 4) curing speed, and 5) ink fluid properties (e.g., emulsion stability and ink viscosity).

Any drop-on-demand printhead known to those of ordinary skill in the art of inkjet printing can be used to apply the aqueous energy curable inkjet inks in the present method. Typical parameters, such as, for example, printing resolution, printing speed, printhead and ink temperature, driving voltage and pulse width, can be adjusted according to the specifications of the inkjet printhead. Inkjet printheads which are generally suitable for usage in the methods herein have a droplet size in the range of 2 to 80 pL and a droplet frequency in the range of 10 to 100 kHz, and high quality prints may be obtained, for example.

After application onto the substrate, the aqueous energy curable inkjet ink is dried. Preferably, the aqueous energy curable inkjet ink is dried using external heat, IR or n-IR, for example, using a heater such as a heating element (e.g., nichrome wire heater), a heat lamp, a warm/hot air heating device, etc., to facilitate drying and/or to increase drying speeds of the applied energy curable inkjet ink. The aqueous energy curable inkjet ink may be dried under a variety of conditions depending on the particular substrate, the amount of ink applied, etc., but typically is dried under conditions suitable to cause a weight loss (due to evaporation) of at least 25 wt. %, preferably at least 30 wt. %, more preferably at least 35 wt. %, even more preferably at least 40 wt. %, yet even more preferably at least 45 wt. %, and up to 65 wt. %, preferably up to 60 wt. %, more preferably up to 55 wt. %, even more preferably up to 50 wt. %, relative to a starting weight of the applied aqueous energy curable inkjet ink.

For example, the aqueous energy curable inkjet ink may be dried at a drying temperature of at least 35 °C, preferably at least 40 °C, preferably at least 45 °C, more preferably at least 50 °C, even more preferably at least 55 °C, yet even more preferably at least 60 °C, and up to 100 °C, preferably up to 90 °C, preferably up to 80 °C, more preferably up to 75 °C, even more preferably up to 70 °C, yet even more preferably up to 65 °C, and for a duration of up to 10 minutes, for example at least 0.5 minutes, preferably at least 1 minutes, more preferably at least 1.5 minutes, even more preferably at least 2 minutes, and up to 10 minutes, preferably up to 8 minutes, more preferably up to 6 minutes, even more preferably up to 4 minutes, yet even more preferably up to 3 minutes.

After being dried to an acceptable degree, the aqueous energy curable inkjet ink is cured. Any curing stimulus may be utilized, although the use of ultraviolet (UV) energy and/or electron beam (EB) energy is preferred. Regardless of which curing stimulus is used, the energy source may be located in-line and directly downstream of the heater so that the curing step may be performed shortly after the applied ink is dried, although other configurations are also contemplated.

When the aqueous energy curable inkjet inks are formulated with a photoinitiator (F), a satisfactory degree of curing may be accomplished using UV light. Because the polyether macromer-modified poly(meth)acrylate (C) provides effective emulsification, and the aqueous energy curable inkjet inks are thus generally accepting of a wide variety of photoinitiators (F) - both water-soluble and water-insoluble - UV curing may be accomplished using a wide variety of UV light sources including, but not limited to, a H-type UV bulb (mercury vapor bulb), short-wave UV lamps, incandescent lamps (halogen lamps) with a filter coating such as fused quartz, gas-discharge lamps, UV light-emitting diodes (LEDs), and UV lasers. Preferably, H-type UV bulbs are used for UV curing methods such as those with a maximum power of up to 600 watts/inch. In some embodiments, the aqueous energy curable inkjet inks are cured using UV light having a fluence (dose) of at least 350 mJ/cm², preferably at least 500 mJ/cm², preferably at least 600 mJ/cm², preferably at least 700 mJ/cm², more preferably at least 800 mJ/cm², even more preferably at least 900 mJ/cm², yet even more preferably at least 1,000 mJ/cm², and up to 1,500 mJ/cm², preferably up to 1,400 mJ/cm², more preferably up to 1,300 mJ/cm², even more preferably up to 1,200 mJ/cm², yet even more preferably up to 1,100 mJ/cm².

Alternatively, the aqueous energy curable inkjet inks may be cured using EB energy regardless of whether a photoinitiator (F) is present or not. In electron beam curing methods, electrons emerge from a vacuum chamber through a metal foil and reach the aqueous energy curable inkjet ink on the substrate in a reaction chamber. Electron beam curing processes typically generate little heat and thus help prevent substrate distortion from thermal processing. Upon exposure to electron beam radiation, any curable/photopolymerizable components present in the aqueous energy curable inkjet ink (e.g., the emulsified water-insoluble photopolymerizable compound (A)) will undergo polymerization, crosslinking, and/or hardening.

The aqueous energy curable inkjet inks may be exposed to electron beam radiation using any electron beam generator, such as electron beam generators available from Electron Crosslinking AB (Sweden), Comet AG (Switzerland) or Energy Sciences, Inc. (ESI) (USA). In some embodiments, the aqueous energy curable inkjet inks are cured to a satisfactory degree by being exposed to a dose of electron beam radiation of at least 0.5 Mrad, preferably at least 1 Mrad, preferably at least 1.5 Mrad, preferably at least 2 Mrad, more preferably at least 2.5 Mrad, yet even more preferably at least 3 Mrad, and up to 10 Mrad, preferably up to 9 Mrad, preferably up to 8 Mrad, preferably up to 7 Mrad, preferably up to 6 Mrad, more preferably up to 5 Mrad, even more preferably up to 4 Mrad, yet even more preferably up to 3.5 Mrad. The dose of electron beam radiation can be adjusted based on the dimensions and surface characteristics of the substrate, the coating thickness of the aqueous energy curable inkjet inks, and/or the desired level of curing, for example by reducing or increasing the dosage and/or exposure time.

Various electron beam accelerating potentials may be employed in the methods disclosed herein, however, an accelerating potential of less than 300 kV is typically used, preferably less than 260 kV, more preferably less than 240 kV, even more preferably less than 220 kV, for example in a range of about 70 to about 200 kV.

The method of the present disclosure may optionally include supplying an inert gas during curing operations to displace oxygen ("inerting") which inhibits free-radical polymerization. In some embodiments, less than about 200 ppm, preferably less than 180 ppm, more preferably less than 160 ppm, even more preferably less than 140 ppm oxygen is present during curing. Any suitable inert gas may be used including, but not limited to, nitrogen gas and argon gas.

It should also be recognized that substrate surface treatments such as corona treatment, atmospheric plasma treatment, and/or flame treatment may be optionally employed in the methods herein prior to application of the aqueous energy curable inkjet inks to improve printed article characteristics, for example ink adhesion. These surface treatment processes may take place in-line (i.e., during the production run) or off-line (i.e., the substrate is surface treated prior to the production run, for example during the manufacturing of the substrate at a separate facility). The parameters of such substrate surface treatments may be varied greatly depending on the substrate material to be printed, the specific aqueous energy curable inkjet inks utilized, the printing method applied, and the desired properties and applications of the printed article.

The examples below are intended to further illustrate the aqueous energy curable inkjet inks and are not intended to limit the scope of the claims.

### EXAMPLES

### Preparation methods

The inks were prepared by combining the water-insoluble photopolymerizable compound (A), the polyether macromer-modified poly(meth)acrylate (C), the pigment (E) and any desired optional water-insoluble ingredient (e.g. the photoinitiator (F), the silane (H), the additive (I) (e.g., optical brightener, stabilizer, security taggant, etc.)) in Container 1 and resin (B), water (D) and any desired optional water-soluble ingredient (e.g., the organic solvent (D1), the wax (G), the additive (I) (e.g., optical brightener, stabilizer, security taggant, etc.) and/or the water-soluble photopolymerizable compound (J)) in Container 2. Container 1 was mixed at 45°C until a uniform solution was formed. Container 2 was mixed at 25°C until a uniform solution was formed. Contents of Container 2 were then added to Container 1 and was mixed at 25°C until a stable emulsion was formed.

### Viscosity measurement

The viscosity was measured with a Brookfield DV-E Viscometer made by AMETEK Brookfield at 25 °C and presented in units of centipoise (cP). Inks with a measured viscosity of 3 to 35 cP were given a "Pass" rating (are deemed jettable/suitable for inkjet printing), while those with a measured viscosity outside of this range were given a "Fail" rating (are deemed not jettable/not suitable for inkjet printing).

### Emulsion stability test

Emulsion stability was determined by agitating the inks in a graduated cylinder using a homogenizer, stopping agitation, and measuring for any phase separation. If phase separation occurred, the volume of the oil phase that separates from the water phase was recorded in terms of volume %. Emulsion stability of the inks was then be categorized as: Pass (no phase separation); Acceptable (slight oil/water phase separation with no more than 15 vol. % separated oil phase); Fail (oil/water phase separation with > 15 vol. % separated oil phase). The aqueous energy curable inkjet inks herein are characterized as stable emulsions, with an acceptable or pass rating, preferably a pass rating.

### Aqueous energy curable inkjet inks

In the tables below, the amount of each component is expressed in terms of weight percentage. "Comp. Ex" refers to a Comparative Example.

To identify aqueous energy curable inkjet inks with acceptable fluid properties - emulsion stability and ink viscosity - several example inks were prepared according to the formulation in Table 1.

**Table 1. Aqueous energy curable inkjet ink formulation**

| Raw Material | Component | Ink Formulation |
|---|---|---|
| GENOMER 3364 | A1 | 1.25 |
| VEEA | A1 | 7.2 |
| MIRAMER M222 | A1 | 7.05 |
| MIRAMER M300 | A1 | 1.25 |
| UCECOAT 2801 (20 wt. % solution in water) | B1 | 20 |
| * Surfactant* | "C" | 4.0 |
| Water | D | 43.0 |
| GENOCURE DETX | F | 0.75 |
| OMNIRAD TPO-L | F | 2.0 |
| OMNIRAD 819 | F | 0.5 |
| PAK512CL170423-C1 | E | 13.0 |
| Total | | 100.00 |

The surfactant ingredient from the formulation in Table 1 was varied and the fluid properties of the example inks were evaluated according to the viscosity and emulsion stability testing procedures detailed above, and the results are presented in Table 2.

**Table 2. Inks prepared with various surfactants using the Ink formulation of Table 1**

| | * Surfactant* | Emulsion Stability | Viscosity |
|---|---|---|---|
| Comp. Ex 1 | BYK-348 | Fail | - |
| Comp. Ex 2 | BYK-377 | Fail | - |
| Comp. Ex 3 | BYK-361N | Fail | - |
| Comp. Ex 4 | BYK-307 | Fail | - |
| Comp. Ex 5 | BYK-301 | Fail | - |
| Ex 1 | BYK-3560 | Pass | Pass |
| Ex 2 | BYK-3565 | Acceptable | Pass |
| Comp. Ex 6 | SURFYNOL SEF | Fail | - |
| Comp. Ex 7 | TEGO TWIN 4100 | Fail | - |
| Comp. Ex 8 | TEGO WET 510 | Fail | - |
| Comp. Ex 9 | TEGO RAD 2300 | Fail | - |
| Comp. Ex 10 | PEMULEN EZ-4U | - | Fail |
| Comp. Ex 11 | PEMULEN TR-2 | Fail | - |
| Comp. Ex 12 | BIO-SOFT N-600 | Fail | - |
| Comp. Ex 13 | MAKON DA-4 | Fail | - |
| Comp. Ex 14 | MERPOL SE | Fail | - |
| Comp. Ex 15 | POLYSTEP TD-6 | Fail | - |
| Comp. Ex 16 | TOXIMUL SEE-340 | Fail | - |
| Comp. Ex 17 | PLANTASENS NATURAL EMULSIFIER HE20 | Fail | - |

As can be seen from Table 2, of all of the surfactant types tested, only polyether macromer-modified poly(meth)acrylates (C) (e.g., BYK-3560 and BYK-3565, each available from BYK) were capable of forming stable emulsions with jettable viscosity (Examples 1 and 2).

On the other hand, other types of surfactants failed emulsion stability testing (inks separated into oil and water phases) and/or jettable viscosity testing when employed in the formulation shown in Table 1, including those common to inkjet inks such as polyether modified siloxanes (e.g., BYK-301, BYK-307, BYK-348, BYK-377), polyacrylates (e.g., BYK-361N, PEMULEN EZ-4U, PEMULEN TR-2), acetylenic diol and acetylenic glycol-based gemini surfactants (e.g., SURFYNOL SEF), polysiloxane-based gemini surfactants (e.g., TEGO TWIN 4100), non-ionic polyethers (e.g., TEGO WET 510), photo-cross-linkable silicone polyether acrylates (e.g., TEGO RAD 2300), alkoxylated fatty alcohols (e.g., BIO-SOFT N-600, MAKON DA-4, MERPOL SE, POLYSTEP TD-6), polysorbates (e.g., TOXIMUL SEE-340), and glycosides of fatty alcohols (e.g., PLANTASENS NATURAL EMULSIFIER HE20)(Comparative Examples 1-17).

With this in mind, several example aqueous energy curable inkjet inks (Examples 1, and 3-22) with advantageous fluid properties were prepared using polyether macromer-modified poly(meth)acrylate BYK-3560 according to the formulations in Tables 3-5 below.

**Table 3. Aqueous energy curable inkjet inks examples**

| Raw Material | Component | Ex 1 | Comp. Ex 1 | Ex 3 | Ex 4 | Ex 5 | Ex 6 | Ex 7 |
|---|---|---|---|---|---|---|---|---|
| GENOMER 3364 | A1 | 1.25 | 1.25 | 1.25 | 1.25 | 1.25 | 1.25 | 5 |
| VEEA | A1 | 7.2 | 7.2 | 7.2 | 7.2 | 7.2 | 9.36 | 7.2 |
| MIRAMER M222 | A1 | 7.05 | 7.05 | 7.05 | 7.05 | 7.05 | 9.165 | 7.05 |
| MIRAMER M300 | A1 | 1.25 | 1.25 | 1.25 | 1.25 | 1.25 | 1.625 | 1.25 |
| UCECOAT 2801 (20 wt. % solution in water) | B1 | 20 | 20 | 20 | 20 | 20 | 20 | 20 |
| BYK-3560 | C | 4 | - | 4 | 4 | 4 | 4 | 4 |
| BYK-348 | surfactant | - | 4 | - | - | - | - | - |
| Water | D | 43 | 43 | 33 | 42.5 | 41 | 38.35 | 39.25 |
| GENOCURE DETX | F | 0.75 | 0.75 | 0.75 | 0.75 | 0.75 | 0.75 | 0.75 |
| OMNIRAD TPO-L | F | 2.0 | 2.0 | 2.0 | 2.0 | 2.0 | 2.0 | 2.0 |
| OMNIRAD 819 | F | 0.5 | 0.5 | 0.5 | 0.5 | 0.5 | 0.5 | 0.5 |
| JCCL-PE wax | G | - | - | 10 | - | - | - | - |
| SURFYNOL SEF | surfactant | - | - | - | 0.5 | - | - | - |
| COATOSIL MP 200 | H | - | - | - | - | 2.0 | - | - |
| PAK512CL170423-C1 | E | 13.0 | 13.0 | 13.0 | 13.0 | 13.0 | 13.0 | 13.0 |
| Total | | 100.00 | 100.00 | 100.00 | 100.00 | 100.00 | 100.00 | 100.00 |

**Table 4. Aqueous energy curable inkjet inks examples (UV curable)**

| Raw Material | Component | Comp. Ex 18* | Ex 8 | Ex 9 | Ex 10 | Ex 11 | Ex 12 | Ex 13 | Ex 14 | Ex 15 |
|---|---|---|---|---|---|---|---|---|---|---|
| GENOMER 3364 | A1 | - | 1.33 | 1.33 | 1.33 | 1.33 | 1.33 | 1.33 | 1.33 | 1.33 |
| VEEA | A1 | - | 7.65 | 7.65 | 7.65 | 7.65 | 7.65 | 7.65 | 7.65 | 7.65 |
| MIRAMER M222 | A1 | - | 7.49 | 7.49 | 7.49 | 7.49 | 7.49 | 7.49 | 7.49 | 7.49 |
| MIRAMER M300 | A1 | - | 1.33 | 1.33 | 1.33 | 1.33 | 1.33 | 1.33 | 1.33 | 1.33 |
| SR551 | J | 30.0 | - | - | - | - | - | - | - | - |
| PVP K-12 | B2 | - | 2.0 | - | 2.0 | 2.0 | 2.0 | - | - | - |
| UCECOAT 2804 (20 wt. % solution in water) | B1 | 20.0 | - | 17.0 | - | - | - | 17.0 | 17.0 | 17.0 |
| BYK-3560 | C | - | 3.4 | 3.4 | 3.4 | 3.4 | 3.4 | 3.4 | 3.4 | 3.4 |
| Water | D | 45.0 | 58.35 | 43.35 | 45.60 | 54.10 | 56.65 | 30.60 | 39.10 | 41.65 |
| Propylene glycol | D1 | - | - | - | 12.75 | - | - | 12.75 | - | - |
| GENOCURE DETX | F | - | 0.8 | 0.8 | 0.8 | 0.8 | 0.8 | 0.8 | 0.8 | 0.8 |
| OMNIRAD TPO-L | F | - | 2.13 | 2.13 | 2.13 | 2.13 | 2.13 | 2.13 | 2.13 | 2.13 |
| OMNIRAD 819 | F | - | 0.53 | 0.53 | 0.53 | 0.53 | 0.53 | 0.53 | 0.53 | 0.53 |
| OMNIRAD 2959 | F | 5 | - | - | - | - | - | - | - | - |
| JCCL-PE wax | G | - | - | - | - | 4.25 | - | - | 4.25 | - |
| COATOSIL MP 200 | H | - | - | - | - | - | 1.70 | - | - | 1.70 |
| PAK512CL170423-C1 | E | - | 15.0 | 15.0 | 15.0 | 15.0 | 15.0 | 15.0 | 15.0 | 15.0 |
| Total | | 100.00 | 100.01 | 100.01 | 100.01 | 100.01 | 100.01 | 100.01 | 100.01 | 100.01 |

| | | | | | | | | | | |
|---|---|---|---|---|---|---|---|---|---|---|
| * JP 2012097191 - incorporated herein by reference in its entirety | | | | | | | | | | |

**Table 5. Aqueous energy curable inkjet inks examples (EB curable)**

| Raw Material | Component | Comp. Ex 18* | Ex 16 | Ex 17 | Ex 18 | Ex 19 | Ex 20 | Ex 21 | Ex 22 |
|---|---|---|---|---|---|---|---|---|---|
| GENOMER 3364 | A1 | - | 1.33 | 1.33 | 1.33 | 1.33 | 1.33 | 1.33 | 1.33 |
| VEEA | A1 | - | 7.65 | 7.65 | 7.65 | 7.65 | 7.65 | 7.65 | 7.65 |
| MIRAMER M222 | A1 | - | 7.49 | 7.49 | 7.49 | 7.49 | 7.49 | 7.49 | 7.49 |
| MIRAMER M300 | A1 | - | 1.33 | 1.33 | 1.33 | 1.33 | 1.33 | 1.33 | 1.33 |
| SR551 | J | 30.0 | - | - | - | - | - | - | - |
| PVP K-12 | B2 | - | 2.0 | - | 2.0 | 2.0 | 2.0 | - | - |
| UCECOAT 2804 (20 wt. % solution in water) | B1 | 20.0 | - | 17.0 | - | - | - | 17.0 | 17.0 |
| BYK-3560 | C | - | 3.4 | 3.4 | 3.4 | 3.4 | 3.4 | 3.4 | 3.4 |
| Water | D | 45.0 | 61.80 | 46.80 | 49.05 | 57.55 | 60.10 | 34.05 | 42.55 |
| Propylene glycol | D1 | - | - | - | 12.75 | - | - | 12.75 | - |
| OMNIRAD 2959 | F | 5 | - | - | - | - | - | - | - |
| JCCL-PE wax | G | - | - | - | - | 4.25 | - | - | 4.25 |
| COATOSIL MP 200 | H | - | - | - | - | - | 1.70 | - | - |
| PAK512CL170423-C1 | E | - | 15.0 | 15.0 | 15.0 | 15.0 | 15.0 | 15.0 | 15.0 |
| Total | | 100.00 | 100.00 | 100.00 | 100.00 | 100.00 | 100.00 | 100.00 | 100.00 |

| | | | | | | | | | |
|---|---|---|---|---|---|---|---|---|---|
| * JP 2012097191 - incorporated herein by reference in its entirety | | | | | | | | | |

### Printing evaluation methods

### Drying speed measurements

Drying speeds may be measured as the amount of water or other volatile components lost (in mg) per area of coverage under applied heat within a specific time (units of mg/cm²·s).

To perform the drying speed evaluation, a substrate was first weighed and the weight recorded. Next, a fresh sample was prepared by applying an aqueous energy curable inkjet ink to be tested onto the substrate, and a weight of the fresh sample was measured and recorded. The fresh sample was then dried at 60 °C for two (2) minutes, and the dried sample was re-weighed to determine the weight loss of the aqueous energy curable inkjet ink after accounting for the weight of the substrate. The drying speed results are expressed in terms of weight loss by subtracting a percentage of the dried aqueous energy curable inkjet ink relative to the starting weight of the newly applied aqueous energy curable inkjet ink from 100, and categorized according to Table 6.

**Table 6. Drying speed categories**

| Weight Loss | Result |
|---|---|
| 0 - < 25% | 3 - Fail, slow drying |
| 25 - 35% | 2 - Pass, acceptable drying |
| > 35% | 1 - Pass, fast drying |

### Curing speed measurements

The curing speed of the aqueous energy curable inkjet inks were measured by subjecting a dried sample (prepared according to the drying speed measurements above) to either
(i) UV cure conditions with a UV fluence (dose) of 1,000 mJ/cm² using a H-type UV bulb, or
(ii) EB cure conditions with a 3.0 Mrad dose of electron beam radiation using an electron beam generator from Comet AG, Switzerland.

The surface condition (tack) of the cured inks was then determined by finger (using touch), and categorized according to Table 7.

**Table 7. Curing speed categories**

| Surface Condition | Result |
|---|---|
| Tacky, tack does not fade over time, ink can be rubbed off | 3 - Fail, slow curing |
| Slight tack, tack fades over time | 2 - Pass, acceptable curing |
| No tack | 1 - Pass, fast curing |

### Aqueous energy curable inkjet ink printing performance

Aqueous energy curable inkjet ink Examples 1 and 3-7, and Comparative Example 1 were tested according to drying speed and curing speed and the results are summarized in Table 8 below.

**Table 8. Performance of Examples 1, 3-7, and Comparative Example 1**

| | Ex 1 | Comp. Ex 1^{a} | Ex 3 | Ex 4 | Ex 5 | Ex 6 | Ex 7 |
|---|---|---|---|---|---|---|---|
| Drying Speed | 2 | - | 1 | 1 | 2 | 2 | 2 |
| Curing Speed (UV) | 2 | - | 1 | 2 | 2 | 1 | 2 |

| | | | | | | | |
|---|---|---|---|---|---|---|---|
| ^{a} Failed the emulsion stability test - the oil phase immediately separated from the water phase | | | | | | | |

Where a numerical limit or range is stated herein, the endpoints are included. Also, all values and subranges within a numerical limit or range are specifically included as if explicitly written out.

As used herein the words "a" and "an" and the like carry the meaning of "one or more."

Obviously, numerous modifications and variations of the present invention are possible in light of the above teachings. It is therefore to be understood that, within the scope of the appended claims, the invention may be practiced otherwise than as specifically described herein.

## Claims

1. An aqueous energy curable inkjet ink, comprising:
(A) an emulsified water-insoluble photopolymerizable compound;
(B) a resin, which may be (B1) a photopolymerizable resin or (B2) a non-photopolymerizable resin;
(C) a polyether macromer-modified poly(meth)acrylate; and
(D) at least 25 wt. % water, based on a total weight of the aqueous energy curable inkjet ink, wherein
the emulsified water-insoluble photopolymerizable compound (A) is at least one selected from the group consisting of an emulsified water-insoluble photopolymerizable monomer (A1) and an emulsified water-insoluble photopolymerizable oligomer (A2),
the photopolymerizable resin (Bl) is a (meth)acrylated polyurethane dispersion, and
the non-photopolymerizable resin (B2) is a polyvinylpyrrolidone, a poly(2-oxazoline), or a polyurethane-poly(meth)acrylate hybrid dispersion.

2. The aqueous energy curable inkjet ink of claim 1, wherein the emulsified water-insoluble photopolymerizable compound (A) is present in an amount of 10 to 40 wt. %, based on a total weight of the aqueous energy curable inkjet ink.

3. The aqueous energy curable inkjet ink of claim 1 or 2, wherein the emulsified water-insoluble photopolymerizable monomer (A1) is present, and the water-insoluble photopolymerizable monomer (A1) is at least one selected from the group consisting of a water-insoluble photopolymerizable mono-ethylenically unsaturated monomer and a water-insoluble photopolymerizable poly-ethylenically unsaturated monomer.

4. The aqueous energy curable inkjet ink of any one of claims 1 to 3, which is substantially free of a water-soluble photopolymerizable monomer.

5. The aqueous energy curable inkjet ink of any one of claims 1 to 4, wherein the resin (B) is present in an amount of 0.1 to 10 wt. %, based on a total weight of the aqueous energy curable inkjet ink.

6. The aqueous energy curable inkjet ink of any one of claims 1 to 4, wherein the resin (B) is a photopolymerizable resin (B 1).

7. The aqueous energy curable inkjet ink of any one of claims 1 to 6, wherein the polyether macromer-modified poly(meth)acrylate (C) is present in an amount of 2 to 8 wt. %, based on a total weight of the aqueous energy curable inkjet ink.

8. The aqueous energy curable inkjet ink of any one of claims 1 to 7, wherein the polyether macromer-modified poly(meth)acrylate (C) is a poly(meth)acrylate modified with only polyether macromer side chains, or a mixture of polyether macromer side chains and silicone macromer side chains.

9. The aqueous energy curable inkjet ink of any one of claims 1 to 8, further comprising (E) a pigment.

10. The aqueous energy curable inkjet ink of any one of claims 1 to 9, further comprising (F) a photoinitiator.

11. The aqueous energy curable inkjet ink of any one of claims 1 to 10, which is substantially free of (F) a photoinitiator.

12. The aqueous energy curable inkjet ink of any one of claims 1 to 11, further comprising (G) a wax.

13. The aqueous energy curable inkjet ink of any one of claims 1 to 12, further comprising (H) a silane.

14. A method of forming a printed image on a substrate, comprising:
applying the aqueous energy curable inkjet ink of any one of claims 1 to 13 onto the substrate with an inkjet printhead;
drying; and then
curing the aqueous energy curable inkjet ink.

## Patentansprüche

1. Wässrige, energiehärtbare Tintenstrahldrucktinte, umfassend:
(A) eine emulgierte, wasserunlösliche, photopolymerisierbare Verbindung;
(B) ein Harz, das (B1) ein photopolymerisierbares Harz oder (B2) ein nicht-photopolymerisierbares Harz sein kann;
(C) ein mit einem Polyethermakromer modifiziertes Poly(meth)acrylat; und
(D) mindestens 25 Gew.-% Wasser, bezogen auf ein Gesamtgewicht der wässrigen, energiehärtbaren Tintenstrahldrucktinte, wobei
die emulgierte, wasserunlösliche, photopolymerisierbare Verbindung (A) mindestens eine, ausgewählt aus der Gruppe, bestehend aus einem emulgierten, wasserunlöslichen, photopolymerisierbaren Monomer (A1) und einem emulgierten, wasserunlöslichen, photopolymerisierbaren Oligomer (A2), ist,
das photopolymerisierbare Harz (B1) eine Dispersion eines (meth)acrylierten Polyurethans ist, und
das nicht-photopolymerisierbare Harz (B2) ein Polyvinylpyrrolidon, ein Poly(2-oxazolin) oder eine Polyurethan-Poly(meth)acrylat-Hybriddispersion ist.

2. Wässrige, energiehärtbare Tintenstrahldrucktinte gemäß Anspruch 1, wobei die emulgierte, wasserunlösliche, photopolymerisierbare Verbindung (A) in einer Menge von 10 bis 40 Gew.-%, bezogen auf ein Gesamtgewicht der wässrigen, energiehärtbaren Tintenstrahldrucktinte, vorliegt.

3. Wässrige, energiehärtbare Tintenstrahldrucktinte gemäß Anspruch 1 oder 2, wobei das emulgierte, wasserunlösliche, photopolymerisierbare Monomer (A1) vorhanden ist und das wasserunlösliche, photopolymerisierbare Monomer (A1) mindestens eines, ausgewählt aus der Gruppe, bestehend aus einem wasserunlöslichen, photopolymerisierbaren, monoethylenisch ungesättigten Monomer und einem wasserunlöslichen, photopolymerisierbaren, polyethylenisch ungesättigten Monomer, ist.

4. Wässrige, energiehärtbare Tintenstrahldrucktinte gemäß einem der Ansprüche 1 bis 3, die im Wesentlichen frei von einem wasserlöslichen, photopolymerisierbaren Monomer ist.

5. Wässrige, energiehärtbare Tintenstrahldrucktinte gemäß einem der Ansprüche 1 bis 4, wobei das Harz (B) in einer Menge von 0,1 bis 10 Gew.-%, bezogen auf ein Gesamtgewicht der wässrigen, energiehärtbaren Tintenstrahldrucktinte, vorliegt.

6. Wässrige, energiehärtbare Tintenstrahldrucktinte gemäß einem der Ansprüche 1 bis 4, wobei das Harz (B) ein photopolymerisierbares Harz (B1) ist.

7. Wässrige, energiehärtbare Tintenstrahldrucktinte gemäß einem der Ansprüche 1 bis 6, wobei das mit einem Polyethermakromer modifizierte Poly(meth)acrylat (C) in einer Menge von 2 bis 8 Gew.-%, bezogen auf ein Gesamtgewicht der wässrigen, energiehärtbaren Tintenstrahldrucktinte, vorliegt.

8. Wässrige, energiehärtbare Tintenstrahldrucktinte gemäß einem der Ansprüche 1 bis 7, wobei das mit einem Polyethermakromer modifizierte Poly(meth)acrylat (C) ein Poly(meth)acrylat ist, das nur mit Polyethermakromer-Seitenketten oder mit einer Mischung von Polyethermakromer-Seitenketten und Silikonmakromer-Seitenketten modifiziert ist.

9. Wässrige, energiehärtbare Tintenstrahldrucktinte gemäß einem der Ansprüche 1 bis 8, ferner umfassend (E) ein Pigment.

10. Wässrige, energiehärtbare Tintenstrahldrucktinte gemäß einem der Ansprüche 1 bis 9, ferner umfassend (F) einen Photoinitiator.

11. Wässrige, energiehärtbare Tintenstrahldrucktinte gemäß einem der Ansprüche 1 bis 10, die im Wesentlichen frei von (F) einem Photoinitiator ist.

12. Wässrige, energiehärtbare Tintenstrahldrucktinte gemäß einem der Ansprüche 1 bis 11, ferner umfassend (G) ein Wachs.

13. Wässrige, energiehärtbare Tintenstrahldrucktinte gemäß einem der Ansprüche 1 bis 12, ferner umfassend (H) ein Silan.

14. Verfahren zum Erzeugen eines gedruckten Bildes auf einem Substrat, umfassend:
das Auftragen der wässrigen, energiehärtbaren Tintenstrahldrucktinte gemäß einem der Ansprüche 1 bis 13 auf das Substrat mit einem Tintenstrahldruckkopf;
das Trocknen; und anschließend
das Härten der wässrigen, energiehärtbaren Tintenstrahldrucktinte.

## Revendications

1. Encre aqueuse pour impression à jet d'encre durcissable par énergie, comprenant :
(A) un composé photopolymérisable émulsionné insoluble dans l'eau ;
(B) une résine, qui peut être (B1) une résine photopolymérisable ou (B2) une résine non photopolymérisable ;
(C) un poly(méth)acrylate modifié par un macromère de polyéther ; et
(D) au moins 25 % en poids d'eau, sur la base du poids total de l'encre aqueuse pour impression à jet d'encre durcissable par énergie, dans laquelle
le composé photopolymérisable émulsionné insoluble dans l'eau (A) est au moins un composé sélectionné parmi le groupe consistant en un monomère photopolymérisable émulsionné insoluble dans l'eau (A1) et un oligomère photopolymérisable émulsionné insoluble dans l'eau (A2),
la résine photopolymérisable (B1) est une dispersion de polyuréthane (méth)acrylé, et
la résine non photopolymérisable (B2) est de la polyvinylpyrrolidone, de la poly(2-oxazoline), ou une dispersion hybride polyuréthane-poly(méth)acrylate.

2. Encre aqueuse pour impression à jet d'encre durcissable par énergie selon la revendication 1, dans laquelle le composé photopolymérisable émulsionné insoluble dans l'eau (A) est présent en une quantité de 10 à 40 % en poids, sur la base du poids total de l'encre aqueuse pour impression à jet d'encre durcissable par énergie.

3. Encre aqueuse pour impression à jet d'encre durcissable par énergie selon la revendication 1 ou la revendication 2, dans laquelle le monomère photopolymérisable émulsionné insoluble dans l'eau (A1) est présent, et le monomère photopolymérisable insoluble dans l'eau (A1) est au moins un monomère sélectionné parmi le groupe consistant en un monomère mono-éthyléniquement insaturé photopolymérisable insoluble dans l'eau et un monomère poly-éthyléniquement insaturé photopolymérisable insoluble dans l'eau.

4. Encre aqueuse pour impression à jet d'encre durcissable par énergie selon l'une quelconque des revendications 1 à 3, qui est sensiblement dépourvue d'un monomère photopolymérisable soluble dans l'eau.

5. Encre aqueuse pour impression à jet d'encre durcissable par énergie selon l'une quelconque des revendications 1 à 4, dans laquelle la résine (B) est présente en une quantité de 0,1 à 10 % en poids, sur la base du poids total de l'encre aqueuse pour impression à jet d'encre durcissable par énergie.

6. Encre aqueuse pour impression à jet d'encre durcissable par énergie selon l'une quelconque des revendications 1 à 4, dans laquelle la résine (B) est une résine photopolymérisable (B1).

7. Encre aqueuse pour impression à jet d'encre durcissable par énergie selon l'une quelconque des revendications 1 à 6, dans laquelle le poly(méth)acrylate modifié par un macromère de polyéther (C) est présent en une quantité de 2 à 8 % en poids, sur la base du poids total de l'encre aqueuse pour impression à jet d'encre durcissable par énergie.

8. Encre aqueuse pour impression à jet d'encre durcissable par énergie selon l'une quelconque des revendications 1 à 7, dans laquelle le poly(méth)acrylate modifié par un macromère de polyéther (C) est un poly(méth)acrylate modifié par seulement des chaînes latérales de macromère de polyéther, ou un mélange de chaînes latérales de macromère de polyéther et de chaînes latérales de macromère de silicone.

9. Encre aqueuse pour impression à jet d'encre durcissable par énergie selon l'une quelconque des revendications 1 à 8, comprenant en outre (E) un pigment.

10. Encre aqueuse pour impression à jet d'encre durcissable par énergie selon l'une quelconque des revendications 1 à 9, comprenant en outre (F) un photo-initiateur.

11. Encre aqueuse pour impression à jet d'encre durcissable par énergie selon l'une quelconque des revendications 1 à 10, qui est sensiblement dépourvue de (F) un photo-initiateur.

12. Encre aqueuse pour impression à jet d'encre durcissable par énergie selon l'une quelconque des revendications 1 à 11, comprenant en outre (G) une cire.

13. Encre aqueuse pour impression à jet d'encre durcissable par énergie selon l'une quelconque des revendications 1 à 12, comprenant en outre (H) un silane.

14. Procédé de formation d'une image imprimée sur un substrat, comprenant :
une application de l'encre aqueuse pour impression à jet d'encre durcissable par énergie selon l'une quelconque des revendications 1 à 13 sur le substrat avec une tête d'impression à jet d'encre ;
un séchage ; et puis
un durcissement de l'encre aqueuse pour impression à jet d'encre durcissable par énergie.
